(19) Europäisches Patentamt / European Patent Office / Office européen des brevets

(11) **EP 4 607 460 A2**

(12) **EUROPEAN PATENT APPLICATION**

(43) Date of publication:
    **27.08.2025 Bulletin 2025/35**

(51) International Patent Classification (IPC):
    **G06T 7/00** *(2017.01)*        **G06T 7/11** *(2017.01)*

(21) Application number: **25171538.9**

(22) Date of filing: **21.04.2025**

(84) Designated Contracting States:
    **AL AT BE BG CH CY CZ DE DK EE ES FI FR GB GR HR HU IE IS IT LI LT LU LV MC ME MK MT NL NO PL PT RO RS SE SI SK SM TR**
    Designated Extension States:
    **BA**
    Designated Validation States:
    **GE KH LA MA MD TN**

(71) Applicant: **ASML Netherlands B.V.**
    **5500 AH Veldhoven (NL)**

(72) Inventors:
    • **BOTARI, Tiago**
      **5500 AH Veldhoven (NL)**

    • **SCHOONBEEK, Tim, Jeroen**
      **5500 AH Veldhoven (NL)**
    • **LEHMAN, Dan, Lee**
      **5500 AH Veldhoven (NL)**
    • **ONOSE, Alexandru**
      **5500 AH Veldhoven (NL)**
    • **VENSELAAR, Joannes, Jitse**
      **5500 AH Veldhoven (NL)**

(74) Representative: **ASML Netherlands B.V.**
    **Corporate Intellectual Property**
    **P.O. Box 324**
    **5500 AH Veldhoven (NL)**

(54) **DEFECT IDENTIFICATION AND SEGMENTATION WITHOUT LABELED DATA AND IMAGE QUALITY ENHANCEMENT**

(57)     An apparatus for identifying defects on a wafer under inspection includes a memory storing a set of instructions and at least one processor configured to execute the set of instructions to cause the apparatus to perform: operations including: acquiring a set of labeled images, wherein the set of labeled images includes: a first set of images generated by a generative model trained on input images, a conditioning mask, and conditioning parameters, wherein the conditioning mask and the conditioning parameters are associated with a defect; the input images; and the conditioning mask; and training a segmentation model, using the set of labeled images, to predict the defect in a second set of images.

1600

```
1602 ── [ Acquire lower resolution images ]
                    │
                    ▼
1604 ── [ Generating higher resolution images using a
          generative model conditioned by the acquired
          lower resolution images ]
                    │
                    ▼
1606 ── [ Perform metrology or defect inspection using the
          generated high resolution image samples ]
```

**FIG. 16**

EP 4 607 460 A2

**Description**

TECHNICAL FIELD

The embodiments provided herein relate to generating images for use in metrology and defect inspection, and more particularly to using a generative machine learning model to generate high resolution images for use in metrology and defect inspection.

BACKGROUND

In semiconductor wafer manufacturing, a wafer being manufactured will undergo inspection at multiple steps in the manufacturing process. To perform the inspection, images of the wafer may be taken. Taking a higher resolution image of a wafer (such that the image can be examined to perform measurements for metrology or detect defects) can take a relatively long time and can slow down the manufacturing process. It is desirable to be able to generate higher resolution images of a wafer being manufactured from a lower resolution image, which can be taken faster than a higher resolution image, thereby speeding up overall wafer processing.

For example, if each image taken corresponds to $6\,\mu m \times 6\,\mu m$ portion of a wafer, for a 200mm wafer, it would take over 872 million images to image the entire wafer. Training a machine learning model to generate the higher resolution images can be time intensive and computationally intensive, because the images used for training the machine learning model need to be high resolution and need to be labeled with the features or defects to be detected.

SUMMARY

Some embodiments provide a method of identifying defects on a wafer under inspection. The method includes: acquiring a set of labeled images, wherein the set of labeled images includes: a first set of images generated by a generative model trained on input images, a conditioning mask, and conditioning parameters, wherein the conditioning mask and the conditioning parameters are associated with a defect; the input images; and the conditioning mask; and training a segmentation model, using the set of labeled images, to predict the defect in a second set of images.

Some embodiments provide a non-transitory computer readable medium that stores a set of instructions that is executable by at least one processor of a computing device to cause the computing device to perform operations for identifying defects on a wafer under inspection. The operations include: acquiring a set of labeled images, wherein the set of labeled images includes: a first set of images generated by a generative model trained on input images, a conditioning mask, and conditioning parameters, wherein the conditioning mask and the conditioning parameters are associated with a defect; the input images; and the conditioning mask; and training a segmentation model, using the set of labeled images, to predict the defect in a second set of images.

Some embodiments provide an apparatus for performing operations for identifying defects on a wafer under inspection. The apparatus can include a memory storing a set of instructions and at least one processor configured to execute the set of instructions to cause the apparatus to perform: acquiring a set of labeled images, wherein the set of labeled images includes: a first set of images generated by a generative model trained on input images, a conditioning mask, and conditioning parameters, wherein the conditioning mask and the conditioning parameters are associated with a defect; the input images; and the conditioning mask; and training a segmentation model, using the set of labeled images, to predict the defect in a second set of images.

Some embodiments provide a method of image quality enhancement. The method includes: generating higher resolution image samples, using a diffusion-based model trained on a distribution of possible higher resolution images given lower resolution images, wherein the higher resolution image samples match with the lower resolution images; determining a mapping between the generated higher resolution image samples and the lower resolution images; and performing metrology or defect inspection using the generated higher resolution image samples.

Some embodiments provide a non-transitory computer readable medium that stores a set of instructions that is executable by at least one processor of a computing device to cause the computing device to perform operations for image quality enhancement. The operations include: generating higher resolution image samples, using a diffusion-based model trained on a distribution of possible higher resolution images given lower resolution images, wherein the higher resolution image samples match with the lower resolution images; determining a mapping between the generated higher resolution image samples and the lower resolution images; and performing metrology or defect inspection using the generated higher resolution image samples.

Some embodiments provide an apparatus for performing operations for image quality enhancement. The apparatus can include a memory storing a set of instructions and at least one processor configured to execute the set of instructions to cause the apparatus to perform: generating higher resolution image samples, using a diffusion-based model trained on a distribution of possible higher resolution images given lower resolution images, wherein the higher resolution image samples match with the lower resolution images; determining a mapping between the generated higher resolution image samples and the lower resolution images; and performing metrology or defect inspection using the generated higher resolution image samples.

Other advantages of the embodiments of the present disclosure will become apparent from the following description taken in conjunction with the accompanying drawings wherein are set forth, by way of illustration and example, certain embodiments of the present invention.

## BRIEF DESCRIPTION OF FIGURES

The above and other aspects of the present disclosure will become more apparent from the description of exemplary embodiments, taken in conjunction with the accompanying drawings.

**Fig. 1** is a schematic diagram illustrating an example charged-particle beam inspection (CPBI) system, consistent with embodiments of the present disclosure.

**Fig. 2** is a schematic diagram illustrating an example charged-particle beam tool, consistent with embodiments of the present disclosure that may be a part of the example charged-particle beam inspection system of **Fig. 1.**

**Fig. 3** is a schematic diagram illustrating an example multi-beam tool, consistent with embodiments of the present disclosure that can be a part of the example charged-particle beam inspection system of **Fig. 1.**

**Fig. 4** is a block diagram of an exemplary server, consistent with embodiments of the present disclosure.

**Fig. 5** is a schematic diagram illustrating an example neural network, consistent with embodiments of the present disclosure.

**Fig. 6** is a flow diagram of a process for generating images with defects using a generative model, consistent with embodiments of the present disclosure.

**Fig. 7** is a flow diagram of a process for generating images with defects using a style transfer generative model, consistent with embodiments of the present disclosure.

**Figs. 8A** and **8B** are a flow diagram of a process for generating images with defects using a diffusion model, consistent with embodiments of the present disclosure.

**Figs. 9A** and **9B** are a flow diagram of a process for generating images with defects using a generative style transfer model, consistent with embodiments of the present disclosure.

**Fig. 10** is a flow diagram of a process to predict a mask using a segmentation model, consistent with embodiments of the present disclosure.

**Figs. 11A-11C** show flow diagrams of processes to predict a mask from transformed images using a segmentation model, consistent with embodiments of the present disclosure.

**Fig. 12** is a flowchart of an example method of identifying defects on a wafer under inspection, consistent with embodiments of the present disclosure.

**Fig. 13** is an example of a lower resolution image corresponding to two different higher resolution images, consistent with embodiments of the present disclosure.

**Fig. 14A** is a flow diagram of a process for training a diffusion model to predict higher resolution images from a lower resolution input image, consistent with embodiments of the present disclosure.

**Fig. 14B** is a flow diagram of a process for using a trained diffusion model for inference to predict higher resolution images from a lower resolution input image, consistent with embodiments of the present disclosure.

**Fig. 15A** is a flow diagram of a process for generating higher resolution image samples from a lower resolution input image, consistent with embodiments of the present disclosure.

**Fig. 15B** is a flow diagram of an example process for generating higher resolution images using the process of **Fig. 15A,** consistent with embodiments of the present disclosure.

**Fig. 16** is a flowchart of an example method for image quality enhancement, consistent with embodiments of the present disclosure.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations. Instead, they are merely examples of apparatuses and methods consistent with aspects related to the disclosed embodiments as recited in the appended claims. For example, although some embodiments are described in the context of utilizing electron beams, the disclosure is not so limited. Other types of charged-particle beams (e.g., including protons, ions, muons, or any other particle carrying electric charges) may be similarly applied. Furthermore, other imaging systems may be used, such as optical imaging, photon detection, x-ray detection, ion detection, etc.

Relative dimensions of components in drawings may be exaggerated for clarity. Within the following description of drawings, the same or like reference numbers refer to the same or like components or entities, and only the differences with respect to the individual embodiments are described. As used herein, unless specifically stated otherwise, the term "or" encompasses all possible combinations, except where infeasible. For example, if it is stated that a component may include A or B, then, unless specifically stated otherwise or infeasible, the component may include A, or B, or A and B. As a second example, if it is stated that a component may include A, B, or C, then, unless specifically stated otherwise or infeasible, the component may include A, or B, or C, or A and B, or A and C, or B and C, or A and B and C.

Electronic devices are constructed of circuits formed on a piece of semiconductor material called a substrate. The semiconductor material may include, for example, silicon, gallium arsenide, indium phosphide, silicon germanium, or the like. Many circuits may be formed together on the same piece of silicon and are called integrated circuits or ICs. The size of these circuits has decreased dramatically so that many more of them can be fit on the substrate. For example, an IC chip in a smartphone can be as small as a thumbnail and yet may include over 2 billion transistors, the size of each transistor being less than 1/1000th the size of a human hair.

Making these ICs with extremely small structures or components is a complex, time-consuming, and expensive process, often involving hundreds of individual steps. Errors in even one step have the potential to result in defects in the finished IC, rendering it useless. Thus, one goal of the manufacturing process is to avoid such defects to maximize the number of functional ICs made in the process; that is, to improve the overall yield of the process.

One component of improving yield is monitoring the chip-making process to ensure that it is producing a sufficient number of functional integrated circuits. One way to monitor the process is to inspect the chip circuit structures at various stages of their formation. Inspection can be carried out using a scanning charged-particle microscope (SCPM). For example, an SCPM may be a scanning electron microscope (SEM). An SCPM can be used to image these extremely small structures, in effect, taking a "picture" of the structures of the wafer. The image can be used to determine if the structure was formed properly in the proper location. If the structure is defective, then the process can be adjusted, so the defect is less likely to recur.

The working principle of an SCPM (e.g., an SEM) is similar to a camera. A camera takes a picture by receiving and recording intensity of light reflected or emitted from people or objects. An SCPM takes a "picture" by receiving and recording energies or quantities of charged particles (e.g., electrons) reflected or emitted from the structures of the wafer. Typically, the structures are made on a substrate (e.g., a silicon substrate) that is placed on a platform, referred to as a stage, for imaging. Before taking such a "picture," a charged-particle beam may be projected onto the structures, and when the charged particles are reflected or emitted ("exiting") from the structures (e.g., from the wafer surface, from the structures underneath the wafer surface, or both), a detector of the SCPM may receive and record the energies or quantities of those charged particles to generate an image that may be used for inspection or metrology. To take such a "picture," the charged-particle beam may scan through the wafer (e.g., in a line-by-line or zig-zag manner), and the detector may receive exiting charged particles coming from a region under charged particle-beam projection (referred to as a "beam spot"). The detector may receive and record exiting charged particles from each beam spot one at a time and join the information recorded for all the beam spots to generate the inspection image. Some SCPMs use a single charged-particle beam (referred to as a "single-beam SCPM," such as a single-beam SEM) to take a single "picture" to generate the inspection image, while some SCPMs use multiple charged-particle beams (referred to as a "multi-beam SCPM," such as a multi-beam SEM) to take multiple "sub-pictures" of the wafer in parallel and stitch them together to generate the inspection image. By using multiple charged-particle beams, the SCPM may provide more charged-particle beams onto the structures for obtaining these multiple "sub-pictures," resulting in more charged particles exiting from the structures. Accordingly, the detector may receive more exiting charged particles simultaneously and generate inspection images of the structures of the wafer with higher efficiency and faster speed.

Generating and processing these images to determine whether any defects exist (sometimes as small as the nanometer scale) are computationally intensive. And as the physical sizes of IC components continue to shrink, accuracy and yield in defect detection become more important. To inspect a single wafer, it is not uncommon for an inspection system to generate and process a substantial number of images. For example, if each image taken corresponds to 6 $\mu$m $\times$ 6 $\mu$m portion of a wafer, for a 200mm wafer, it would take over 872 million images to image the entire wafer. If these images are not processed and evaluated efficiently, not surprisingly, yield will be dramatically impacted, thereby affecting the wafer throughput.

As the physical sizes of IC components continue to shrink, accuracy and yield in defect detection become more important. Metrology tools can be used to determine whether the ICs are correctly manufactured by identifying a number of defects on each wafer, including at different levels of detail, such as a pattern level, an image (field of view) level, a die level, a care area level, or a wafer level.

Defect inspection can be performed by using tools that measure the fabricated structures in the different steps of the microchip production, such as imaging with optical devices or charged particles (e.g., charged-particle beam inspection tools). Defect inspection includes identification, localization, analysis, and classification of different types of defects. Defects can occur due to various factors including material quality, impurities, contaminations, miss calibrated tools, stochastic defects to name a few. To be able to improve the manufacturing process, it is necessary to identify the causes of defects, which can benefit from pixel-wise classification of the defects.

Current methods for finding and identifying the pixels belonging to a defect are based on unsupervised and supervised machine learning and classical segmentation algorithms. Classical segmentation algorithms may be used, and the most advanced methods are based on some statistical information calculated from an analyzed image. This is the case for methods based on thresholding, edge detection, and region extraction. However, these models are not robust to different possible variabilities of semiconductor images, such as high noise, distortions, misalignment, and feature variabilities. These methodologies present difficulties in classifying the defective pixels when the image quality is not high.

Supervised machine learning capabilities are dependent on the quality and domain of the data used during training of the models. In the case of the semiconductor domain, there is limited data that contains labels of the defects at the pixel-classification level. Producing such datasets with the segmentation masks of the defects is costly and prone to human errors. Unsupervised machine learning techniques rely on clustering that depends on the metric that defines the distance between different sets of instances. Another option is methods based on producing a latent representation, such as using autoencoders. While such models can perform the defect localization, it becomes challenging to resolve the pixel classification with high accuracy by deploying metrics over the latent space.

Embodiments of the present disclosure can provide a method for obtaining segmentation of images and performing classification of defective structures in images produced by defect inspection or metrology. A model is trained without requiring the ground-truth pixel labels for real defects. The model is trained with images that do not contain defects and the defects are added during training. A definition of what a defect should look like is provided and a generative model is used to produce many instances of defects to train a defect segmentation model. The generative models are used to generate new instances of defects that are representative of the defect class. The defect segmentation model is designed not to classify defects, but rather to identify meaningful differences between two or more images, while not identifying the expected variation between the images such as misalignment, varying noise levels, or normal feature variations. The generative model may receive a set of controllable rules and definitions representing the defect class as inputs.

Embodiments of the present disclosure can also provide a method of image quality enhancement (e.g., for CPBI images). A generative model, e.g., a diffusion-based model, is trained to learn the distribution of possible higher quality images given a lower quality input image. The trained model is used to generate one or more higher quality image samples that match with the lower quality input image. A mapping based on the generated higher quality image samples and the lower quality input image is determined.

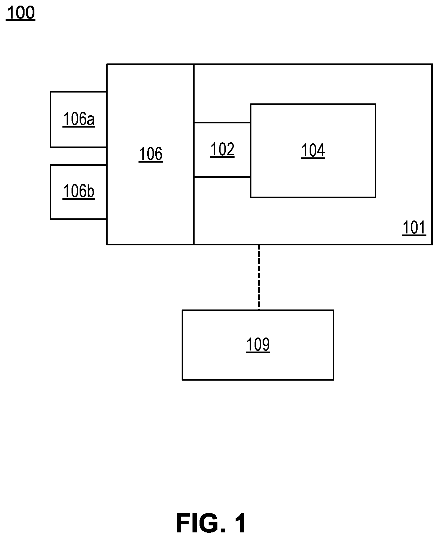

**Fig. 1** illustrates an exemplary charged-particle beam inspection (CPBI) system 100 consistent with embodiments of the present disclosure. CPBI system 100 may be used for imaging. For example, CPBI system 100 may use an electron beam for imaging. As shown in **Fig. 1,** CPBI system 100 includes a main chamber 101, a load/lock chamber 102, a beam tool 104, and an equipment front end module (EFEM) 106. Beam tool 104 is located within main chamber 101. EFEM 106 includes a first loading port 106a and a second loading port 106b. EFEM 106 may include additional loading port(s). First loading port 106a and second loading port 106b receive wafer front opening unified pods (FOUPs) that contain wafers (e.g., semiconductor wafers or wafers made of other material(s)) or samples to be inspected (the terms "wafers" and "samples" may be used interchangeably). A "lot" is a plurality of wafers that may be loaded for processing as a batch.

One or more robotic arms (not shown) in EFEM 106 may transport the wafers to load/lock chamber 102. Load/lock chamber 102 is connected to a load/lock vacuum pump system (not shown) which removes gas molecules in load/lock chamber 102 to reach a first pressure below the atmospheric pressure. After reaching the first pressure, one or more robotic arms (not shown) may transport the wafer from load/lock chamber 102 to main chamber 101. Main chamber 101 is connected to a main chamber vacuum pump system (not shown) which removes gas molecules in main chamber 101 to reach a second pressure below the first pressure. After reaching the second pressure, the wafer is subject to inspection by beam tool 104. Beam tool 104 may be a single-beam system or a multi-beam system.

A controller 109 is electronically connected to beam tool 104. Controller 109 may be a computer that may execute various controls of CPBI system 100. While controller 109 is shown in **Fig. 1** as being outside of the structure that includes main chamber 101, load/lock chamber 102, and EFEM 106, it is appreciated that controller 109 may be a part of the structure.

In some embodiments, controller 109 may include one or more processors (not shown). A processor may be a generic or specific electronic device capable of manipulating or processing information. For example, the processor may include any combination of any number of a central processing unit (or "CPU"), a graphics processing unit (or "GPU"), an optical processor, a programmable logic controller, a microcontroller, a microprocessor, a digital signal processor, an intellectual property (IP) core, a Programmable Logic Array (PLA), a Programmable Array Logic (PAL), a Generic Array Logic (GAL), a Complex Programmable Logic Device (CPLD), a Field-Programmable Gate Array (FPGA), a System On Chip (SoC), an Application-Specific Integrated Circuit (ASIC), and any type circuit capable of data processing. The processor may also be a virtual processor that includes one or more processors distributed across multiple machines or devices coupled via a network.

In some embodiments, controller 109 may further include one or more memories (not shown). A memory may be a generic or specific electronic device capable of storing codes and data accessible by the processor (e.g., via a bus). For example, the memory may include any combination of any number of a random-access memory (RAM), a read-only memory (ROM), an optical disc, a magnetic disk, a hard drive, a solid-state drive, a flash drive, a security digital (SD) card, a memory stick, a compact flash (CF) card, or any type of storage device. The codes may include an operating system (OS) and one or more application programs (or "apps") for specific tasks. The memory may also be a virtual memory that includes one or more memories distributed across multiple machines or devices coupled via a network.

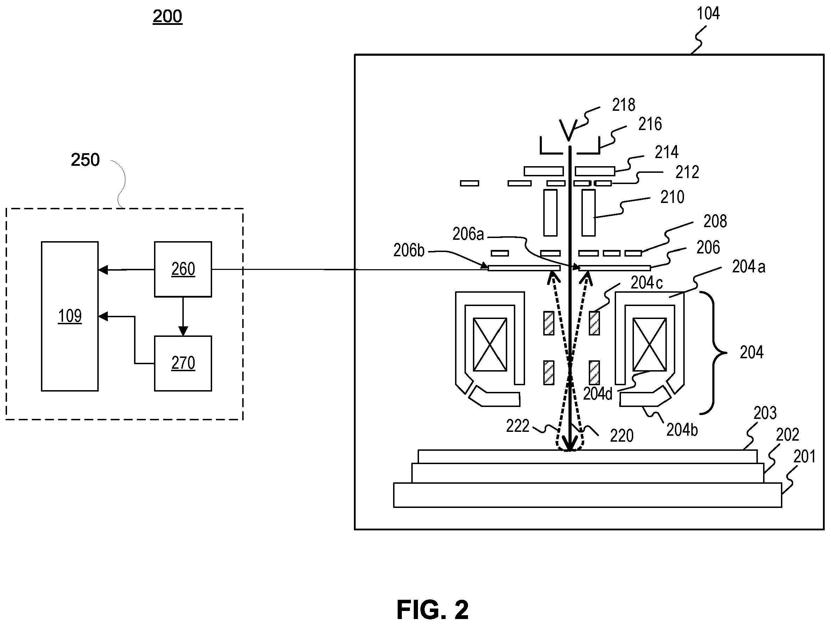

**Fig. 2** illustrates an example imaging system 200 consistent with embodiments of the present disclosure. Beam tool 104 of **Fig. 2** may be configured for use in CPBI system 100. Beam tool 104 may be a single beam apparatus or a multi-beam apparatus. As shown in **Fig. 2,** beam tool 104 includes a motorized sample stage 201, and a wafer holder 202 supported by motorized sample stage 201 to hold a wafer 203 to be inspected. Beam tool 104 further includes an objective lens assembly 204, a charged-particle detector 206 (which includes charged-particle sensor surfaces 206a and 206b), an objective aperture 208, a condenser lens 210, a beam limit aperture 212, a gun aperture 214, an anode 216, and a cathode 218. Objective lens assembly 204, in some embodiments, may include a modified swing objective retarding immersion lens (SORIL), which includes a pole piece 204a, a control electrode 204b, a deflector 204c, and an exciting coil 204d. Beam tool 104 may additionally include an Energy Dispersive X-ray Spectrometer (EDS) detector (not shown) to characterize the materials on wafer 203.

A primary charged-particle beam 220 (or simply "primary beam 220"), such as an electron beam, is emitted from cathode 218 by applying an acceleration voltage between anode 216 and cathode 218. Primary beam 220 passes through gun aperture 214 and beam limit aperture 212, both of which may determine the size of charged-particle beam entering condenser lens 210, which resides below beam limit aperture 212. Condenser lens 210 focuses primary beam 220 before the beam enters objective aperture 208 to set the size of the charged-particle beam before entering objective lens assembly 204. Deflector 204c deflects primary beam 220 to facilitate beam scanning on the wafer. For example, in a scanning process, deflector 204c may be controlled to deflect primary beam 220 sequentially onto different locations of top surface of wafer 203 at different time points, to provide data for image reconstruction for different parts of wafer 203. Moreover, deflector 204c may also be controlled to deflect primary beam 220 onto different sides of wafer 203 at a particular location, at different time points, to provide data for stereo image reconstruction of the wafer structure at that location. Further, in some embodiments, anode 216 and cathode 218 may generate multiple primary beams 220, and beam tool 104 may include a plurality of deflectors 204c to project the multiple primary beams 220 to different parts/sides of the wafer at the same time, to provide data for image reconstruction for different parts of wafer 203.

Exciting coil 204d and pole piece 204a generate a magnetic field that begins at one end of pole piece 204a and terminates at the other end of pole piece 204a. A part of wafer 203 being scanned by primary beam 220 may be immersed in the magnetic field and may be electrically charged, which, in turn, creates an electric field. The electric field reduces the energy of impinging primary beam 220 near the surface of wafer 203 before it collides with wafer 203. Control electrode 204b, being electrically isolated from pole piece 204a, controls an electric field on wafer 203 to prevent micro-arching of wafer 203 and to ensure proper beam focus.

A secondary charged-particle beam 222 (or "secondary beam 222"), such as secondary electron beams, may be emitted from the part of wafer 203 upon receiving primary beam 220. Secondary beam 222 may form a beam spot on sensor surfaces 206a and 206b of charged-particle detector 206. Charged-particle detector 206 may generate a signal (e.g., a voltage, a current, or the like) that represents an intensity of the beam spot and provide the signal to an image processing system 250. The intensity of secondary beam 222, and the resultant beam spot, may vary according to the external or internal structure of wafer 203. Moreover, as discussed above, primary beam 220 may be projected onto different locations of the top surface of the wafer or different sides of the wafer at a particular location, to generate secondary beams 222 (and the resultant beam spot) of different intensities. Therefore, by mapping the intensities of the beam spots with the locations of wafer 203, the processing system may reconstruct an image that reflects the internal or surface structures of wafer 203.

Imaging system 200 may be used for inspecting a wafer 203 on motorized sample stage 201 and includes beam tool 104, as discussed above. Imaging system 200 may also include an image processing system 250 that includes an image acquirer 260, storage 270, and controller 109. Image acquirer 260 may include one or more processors. For example, image acquirer 260 may include a computer, server, mainframe host, terminals, personal computer, any kind of mobile computing devices, and the like, or a combination thereof. Image acquirer 260 may connect with a detector 206 of beam tool 104 through a medium such as an electrical conductor, optical fiber cable, portable storage media, IR, Bluetooth, internet, wireless network, wireless radio, or a combination thereof. Image acquirer 260 may receive a signal from detector 206 and may construct an image. Image acquirer 260 may thus acquire images of wafer 203. Image acquirer 260 may also perform various post-processing functions, such as generating contours, superimposing indicators on an acquired image, and the like. Image acquirer 260 may perform adjustments of brightness and contrast, or the like of acquired images. Storage 270 may be a storage medium such as a hard disk, cloud storage, random access memory (RAM), other types of computer readable memory, and the like. Storage 270 may be coupled with image acquirer 260 and may be used for saving scanned raw image data as original images, post-processed images, or other images assisting of the processing. Image acquirer 260 and storage 270 may be connected to controller 109. In some embodiments, image acquirer 260, storage 270, and controller 109 may be integrated together as one control unit.

In some embodiments, image acquirer 260 may acquire one or more images of a sample based on an imaging signal received from detector 206. An imaging signal may correspond to a scanning operation for conducting charged particle imaging. An acquired image may be a single image including a plurality of imaging areas. The single image may be stored in storage 270. The single image may be an original image that may be divided into a plurality of regions. Each of the regions may include one imaging area containing a feature of wafer 203.

Consistent with some embodiments of this disclosure, a computer-implemented method of identifying defects on a wafer under inspection may include obtaining training data that includes an inspection image of a fabricated integrated circuit (IC) and design layout data of the IC. The obtaining operation, as used herein, may refer to accepting, taking in, admitting, gaining, acquiring, retrieving, receiving, reading, accessing, collecting, or any operation for inputting data. An inspection image, as used herein, may refer to an image generated as a result of an inspection process performed by a charged-particle inspection apparatus (e.g., system 100 of **Fig. 1 or** system 200 of **Fig. 2).** For example, an inspection image may be an SCPM image generated by image processing system 250 in **Fig. 2.** A fabricated IC in this disclosure may refer to an IC manufactured on a sample (e.g., a wafer) in a semiconductor manufacturing process (e.g., a photolithography process). For example, the fabricated IC may be manufactured in a die of the sample. Design layout data of an IC, as used herein, may refer to data representing a designed layout of the IC. In some embodiments, the design layout data may include a design layout file in a GDS format (e.g., a GDS layout file). The design layout file may be visualized (also referred to as "rendered") to be a 2D image (referred to as a "rendered image" herein) that presents the layout of the IC. The rendered image may include various geometric features (e.g., vertices, edges, corners, polygons, holes, bridges, vias, or the like) of the IC.

In some embodiments, the design layout data of the IC may include an image (e.g., the rendered image) rendered based on GDS clip data of the IC. GDS clip data of an IC, as used herein, may refer to design layout data of the IC that is to be fabricated in a die, which is of the GDS format. In some embodiments, the design layout data of the IC may include only a design layout file (e.g., the GDS clip data) of the IC. In some embodiments, the design layout data of the IC may include only the rendered image of the IC. In some embodiments, the design layout data of the IC may include only a golden image of the IC. In some embodiments, the design layout data may include any combination of the design layout file, the golden image, and the rendered image of the IC.

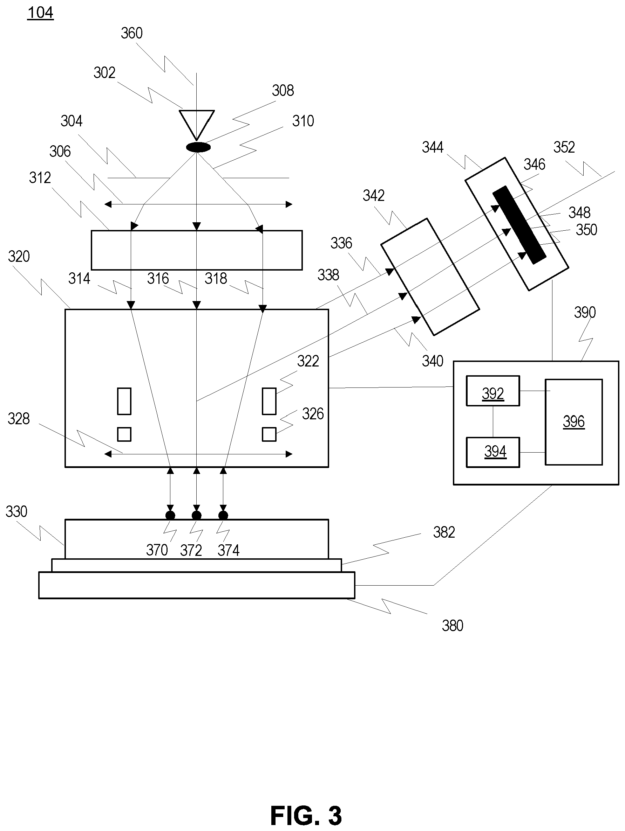

**Fig. 3** illustrates a schematic diagram of an example multi-beam beam tool 104 (also referred to herein as apparatus 104) and an image processing system 390 that may be configured for use in CPBI system 100 **(Fig. 1),** consistent with embodiments of the present disclosure.

Beam tool 104 comprises a charged-particle source 302, a gun aperture 304, a condenser lens 306, a primary charged-particle beam 310 emitted from charged-particle source 302, a source conversion unit 312, a plurality of beamlets 314, 316, and 318 of primary charged-particle beam 310, a primary projection optical system 320, a motorized wafer stage 380, a wafer holder 382, multiple secondary charged-particle beams 336, 338, and 340, a secondary optical system 342, and a charged-particle detection device 344. Primary projection optical system 320 can comprise a beam separator 322, a deflection scanning unit 326, and an objective lens 328. Charged-particle detection device 344 can comprise detection sub-regions 346, 348, and 350.

Charged-particle source 302, gun aperture 304, condenser lens 306, source conversion unit 312, beam separator 322, deflection scanning unit 326, and objective lens 328 can be aligned with a primary optical axis 360 of apparatus 104. Secondary optical system 342 and charged-particle detection device 344 can be aligned with a secondary optical axis 352 of apparatus 104.

Charged-particle source 302 can emit one or more charged particles, such as electrons, protons, ions, muons, or any other particle carrying electric charges. In some embodiments, charged-particle source 302 may be an electron source. For example, charged-particle source 302 may include a cathode, an extractor, or an anode, wherein primary electrons can be emitted from the cathode and extracted or accelerated to form primary charged-particle beam 310 (in this case, a primary electron beam) with a crossover (virtual or real) 308. For ease of explanation without causing ambiguity, electrons are used as examples in some of the descriptions herein. However, it should be noted that any charged particle may be used in any embodiment of this disclosure, not limited to electrons. Primary charged-particle beam 310 can be visualized as being emitted from crossover 308. Gun aperture 304 can block off peripheral charged particles of primary charged-particle beam 310 to reduce Coulomb effect. The Coulomb effect may cause an increase in size of probe spots.

Source conversion unit 312 can comprise an array of image-forming elements and an array of beam-limit apertures. The array of image-forming elements can comprise an array of micro-deflectors or micro-lenses. The array of image-forming elements can form a plurality of parallel images (virtual or real) of crossover 308 with a plurality of beamlets 314, 316, and 318 of primary charged-particle beam 310. The array of beam-limit apertures can limit the plurality of beamlets 314, 316, and 318. While three beamlets 314, 316, and 318 are shown in **Fig. 3,** embodiments of the present disclosure are not so limited. For example, in some embodiments, the apparatus 104 may be configured to generate a first number of beamlets. In some embodiments, the first number of beamlets may be in a range from 1 to 1000. In some embodiments, the first number of beamlets may be in a range from 200-500. In some embodiments, an apparatus 104 may generate 400 beamlets.

Condenser lens 306 can focus primary charged-particle beam 310. The electric currents of beamlets 314, 316, and 318 downstream of source conversion unit 312 can be varied by adjusting the focusing power of condenser lens 306 or by changing the radial sizes of the corresponding beam-limit apertures within the array of beam-limit apertures. Objective lens 328 can focus beamlets 314, 316, and 318 onto a wafer 330 for imaging, and can form a plurality of probe spots 370, 372, and 374 on a surface of wafer 330.

Beam separator 322 can be a beam separator of Wien filter type generating an electrostatic dipole field and a magnetic dipole field. In some embodiments, if they are applied, the force exerted by the electrostatic dipole field on a charged particle (e.g., an electron) of beamlets 314, 316, and 318 can be substantially equal in magnitude and opposite in a direction to the force exerted on the charged particle by magnetic dipole field. Beamlets 314, 316, and 318 can, therefore, pass straight through beam separator 322 with zero deflection angle. However, the total dispersion of beamlets 314, 316, and 318 generated by beam separator 322 can also be non-zero. Beam separator 322 can separate secondary charged-particle beams 336, 338, and 340 from beamlets 314, 316, and 318 and direct secondary charged-particle beams 336, 338, and 340 towards secondary optical system 342.

Deflection scanning unit 326 can deflect beamlets 314, 316, and 318 to scan probe spots 370, 372, and 374 over a surface area of wafer 330. In response to the incidence of beamlets 314, 316, and 318 at probe spots 370, 372, and 374, secondary charged-particle beams 336, 338, and 340 may be emitted from wafer 330. Secondary charged-particle beams 336, 338, and 340 may comprise charged particles (e.g., electrons) with a distribution of energies. For example, secondary charged-particle beams 336, 338, and 340 may be secondary electron beams including secondary electrons (energies $\leq$ 50 eV) and backscattered electrons (energies between 50 eV and landing energies of beamlets 314, 316, and 318). Secondary optical system 342 can focus secondary charged-particle beams 336, 338, and 340 onto detection sub-regions 346, 348, and 350 of charged-particle detection device 344. Detection sub-regions 346, 348, and 350 may be configured to detect corresponding secondary charged-particle beams 336, 338, and 340 and generate corresponding signals (e.g., voltage, current, or the like) used to reconstruct an inspection image of structures on or underneath the surface area of wafer 330.

The generated signals may represent intensities of secondary charged-particle beams 336, 338, and 340 and may be provided to image processing system 390 that is in communication with charged-particle detection device 344, primary projection optical system 320, and motorized wafer stage 380. The movement speed of motorized wafer stage 380 may be synchronized and coordinated with the beam deflections controlled by deflection scanning unit 326, such that the movement of the scan probe spots (e.g., scan probe spots 370, 372, and 374) may orderly cover regions of interest on the wafer 330. The parameters of such synchronization and coordination may be adjusted to adapt to different materials of wafer 330. For example, different materials of wafer 330 may have different resistance-capacitance characteristics that may cause different signal sensitivities to the movement of the scan probe spots.

The intensity of secondary charged-particle beams 336, 338, and 340 may vary according to the external or internal structure of wafer 330, and thus may indicate whether wafer 330 includes defects. Moreover, as discussed above, beamlets 314, 316, and 318 may be projected onto different locations of the top surface of wafer 330, or different sides of local structures of wafer 330, to generate secondary charged-particle beams 336, 338, and 340 that may have different intensities. Therefore, by mapping the intensity of secondary charged-particle beams 336, 338, and 340 with the areas of wafer 330, image processing system 390 may reconstruct an image that reflects the characteristics of internal or external structures of wafer 330.

In some embodiments, image processing system 390 may include an image acquirer 392, a storage 394, and a controller 396. Image acquirer 392 may comprise one or more processors. For example, image acquirer 392 may comprise a computer, server, mainframe host, terminals, personal computer, any kind of mobile computing devices, or the like, or a combination thereof. Image acquirer 392 may be communicatively coupled to charged-particle detection device 344 of beam tool 104 through a medium such as an electric conductor, optical fiber cable, portable storage media, IR, Bluetooth, internet, wireless network, wireless radio, or a combination thereof. In some embodiments, image acquirer 392 may receive a signal from charged-particle detection device 344 and may construct an image. Image acquirer 392 may thus acquire inspection images of wafer 330. Image acquirer 392 may also perform various post-processing functions, such as generating contours, superimposing indicators on an acquired image, or the like. Image acquirer 392 may be configured to perform adjustments of brightness and contrast of acquired images. In some embodiments, storage 394 may be a storage medium such as a hard disk, flash drive, cloud storage, random access memory (RAM), other types of computer-readable memory, or the like. Storage 394 may be coupled with image acquirer 392 and may be used for saving scanned raw image data as original images, and post-processed images. Image acquirer 392 and storage 394 may be connected to controller 396. In some embodiments, image acquirer 392, storage 394, and controller 396 may be integrated together as one control unit.

In some embodiments, image acquirer 392 may acquire one or more inspection images of a wafer based on an imaging signal received from charged-particle detection device 344. An imaging signal may correspond to a scanning operation for conducting charged particle imaging. An acquired image may be a single image comprising a plurality of imaging areas. The single image may be stored in storage 394. The single image may be an original image that may be divided into a plurality of regions. Each of the regions may comprise one imaging area containing a feature of wafer 330. The acquired images may comprise multiple images of a single imaging area of wafer 330 sampled multiple times over a time sequence. The multiple images may be stored in storage 394. In some embodiments, image processing system 390 may be configured to perform image processing steps with the multiple images of the same location of wafer 330.

In some embodiments, image processing system 390 may include measurement circuits (e.g., analog-to-digital converters) to obtain a distribution of the detected secondary charged particles (e.g., secondary electrons). The charged-particle distribution data collected during a detection time window, in combination with corresponding scan path data of beamlets 314, 316, and 318 incident on the wafer surface, can be used to reconstruct images of the wafer structures under inspection. The reconstructed images can be used to reveal various features of the internal or external structures of wafer 330, and thereby can be used to reveal any defects that may exist in the wafer.

In some embodiments, the charged particles may be electrons. When electrons of primary charged-particle beam 310 are projected onto a surface of wafer 330 (e.g., probe spots 370, 372, and 374), the electrons of primary charged-particle beam 310 may penetrate the surface of wafer 330 for a certain depth, interacting with particles of wafer 330. Some electrons of primary charged-particle beam 310 may elastically interact with (e.g., in the form of elastic scattering or collision) the materials of wafer 330 and may be reflected or recoiled out of the surface of wafer 330. An elastic interaction conserves the total kinetic energies of the bodies (e.g., electrons of primary charged-particle beam 310) of the interaction, in which the kinetic energy of the interacting bodies does not convert to other forms of energy (e.g., heat, electromagnetic energy, or the like). Such reflected electrons generated from elastic interaction may be referred to as backscattered electrons (BSEs). Some electrons of primary charged-particle beam 310 may inelastically interact with (e.g., in the form of inelastic scattering or collision) the materials of wafer 330. An inelastic interaction does not conserve the total kinetic energies of the bodies of the interaction, in which some or all of the kinetic energy of the interacting bodies convert to other forms of energy. For example, through the inelastic interaction, the kinetic energy of some electrons of primary charged-particle beam 310 may cause electron excitation and transition of atoms of the materials. Such inelastic interaction may also generate electrons exiting the surface of wafer 330, which may be referred to as secondary electrons (SEs). Yield or emission rates of BSEs and SEs depend on, e.g., the material under inspection and the landing energy of the electrons of primary charged-particle beam 310 landing on the surface of the material, among others. The energy of the electrons of primary charged-particle beam 310 may be imparted in part by its acceleration voltage (e.g., the acceleration voltage between the anode and cathode of charged-particle source 302 in Fig. 3). The quantity of BSEs and SEs may be more or fewer (or even the same) than the injected electrons of primary charged-particle beam 310.

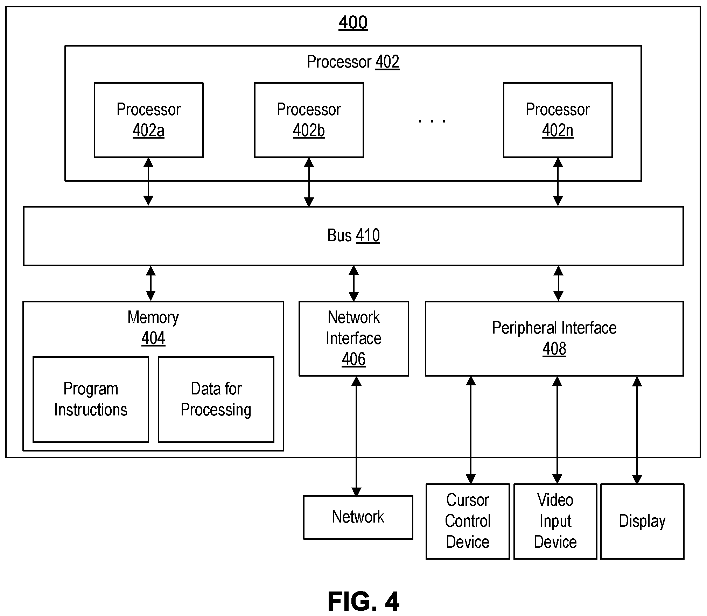

**Fig. 4** is a block diagram of an example server 400, consistent with embodiments of the disclosure. As shown in **Fig. 4,** server 400 can include processor 402. When processor 402 executes instructions described herein, server 400 can become a specialized machine. Processor 402 can be any type of circuitry capable of manipulating or processing information. For example, processor 402 can include any combination of any number of a central processing unit ("CPU"), a graphics processing unit ("GPU"), a neural processing unit ("NPU"), a microcontroller unit ("MCU"), an optical processor, a programmable logic controller, a microcontroller, a microprocessor, a digital signal processor, an intellectual property (IP) core, a Programmable Logic Array (PLA), a Programmable Array Logic (PAL), a Generic Array Logic (GAL), a Complex Programmable Logic Device (CPLD), a Field-Programmable Gate Array (FPGA), a System On Chip (SoC), an Application-Specific Integrated Circuit (ASIC), or the like. In some embodiments, processor 402 can also be a set of processors grouped as a single logical component. For example, as shown in **Fig. 4,** processor 402 can include multiple processors, including processor 402a, processor 402b, and processor 402n.

Server 400 can also include memory 404 configured to store data (e.g., a set of instructions, computer codes, intermediate data, or the like). For example, as shown in **Fig. 4,** the stored data can include program instructions and data for processing. Processor 402 can access the program instructions and data for processing (e.g., via bus 410), and execute the program instructions to perform an operation or manipulation on the data for processing. Memory 404 can include a high-speed random-access storage device or a non-volatile storage device. In some embodiments, memory 404 can include any combination of any number of a random-access memory (RAM), a read-only memory (ROM), an optical disc, a magnetic disk, a hard drive, a solid-state drive, a flash drive, a security digital (SD) card, a memory stick, a compact flash (CF) card, or the like. Memory 404 can also be a group of memories (not shown in **Fig. 4)** grouped as a single logical component.

Bus 410 can be a communication device that transfers data between components inside server 400, such as an internal bus (e.g., a CPU-memory bus), an external bus (e.g., a universal serial bus port, a peripheral component interconnect express port), or the like.

For ease of explanation without causing ambiguity, processor 402 and other data processing circuits are collectively referred to as a "data processing circuit" in this disclosure. The data processing circuit can be implemented entirely as hardware, or as a combination of software, hardware, or firmware. In addition, the data processing circuit can be a single independent module or can be combined entirely or partially into any other component of server 400.

Server 400 can further include network interface 406 to provide wired or wireless communication with a network (e.g., the Internet, an intranet, a local area network, a mobile communications network, or the like). In some embodiments, network interface 406 can include any combination of any number of a network interface controller (NIC), a radio frequency (RF) module, a transponder, a transceiver, a modem, a router, a gateway, a wired network adapter, a wireless network adapter, a Bluetooth adapter, an infrared adapter, a near-field communication ("NFC") adapter, a cellular network chip, or the like.

In some embodiments, optionally, server 400 can further include peripheral interface 408 to provide a connection to one or more peripheral devices. As shown in **Fig. 4,** the peripheral device can include, but is not limited to, a cursor control device (e.g., a mouse, a touchpad, or a touchscreen), a keyboard, a display (e.g., a cathode-ray tube display, a liquid crystal display, or a light-emitting diode display), a video input device (e.g., a camera or an input interface coupled to a video archive), or the like.

Consistent with some embodiments of this disclosure, the computer-implemented method of identifying defects on a wafer under inspection may also include training a machine learning model using the obtained training data. In some embodiments, the machine learning model may be trained by a computer hardware system. In some embodiments, as described elsewhere in this disclosure, the training data may include CPBI images or GDS data.

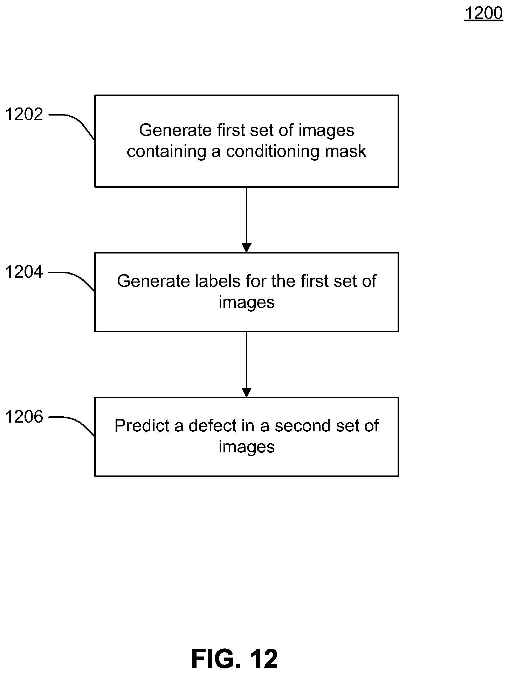

In some embodiments, machine learning may be employed in the generation of inspection images, reference images or other images associated with apparatus 100 or apparatus 200. For example, in some embodiments, a machine learning system may be operated in association with, e.g., controller 109, image processing system 250, image acquirer 260, storage 270, image processing system 390, image acquirer 392, or storage 394 of **Figs. 1-3.** In some embodiments, machine learning may be employed in the method identifying defects on a wafer under inspection, e.g., method 1200 of **Fig. 12.** In some embodiments, a machine learning system may include a discriminative model. In some embodiments, a machine learning system may include a generative model. For example, learning can feature two types of mechanisms: discriminative learning that may be used to create classification and detection algorithms, and generative learning that may be used to create models that can render images. For example, as described further below, a generative model may be configured for generating an image from a design clip that resembles a corresponding location on a wafer in an SCPM image. This may be performed by 1) training the generative model with design clips and the associated actual SCPM images from those locations on the wafer; and 2) using the model in inference mode to feed the model design clips in locations for which simulated SCPM images are desired. Such simulated images can be used as reference images in, e.g., die-to-database inspection.

If the model(s) include one or more discriminative models, the discriminative model(s) may have any suitable architecture and/or configuration known in the art. Discriminative models, also called conditional models, are a class of models used in machine learning for modeling the dependence of an unobserved variable "y" on an observed variable "x." Within a probabilistic framework, this may be done by modeling a conditional probability distribution P(ylx), which can be used for predicting y based on x. Discriminative models, as opposed to generative models, may not allow one to generate samples from the joint distribution of x and y. However, for tasks such as classification and regression that do not require the joint distribution, discriminative models may yield superior performance. On the other hand, generative models are typically more flexible than discriminative models in expressing dependencies in complex learning tasks. In addition, most discriminative models are inherently supervised and cannot easily be extended to unsupervised learning. Application specific details ultimately dictate the suitability of selecting a discriminative versus generative model.

A generative model can be generally defined as a model that is probabilistic in nature. The generative model can be learned (in that its parameters can be learned) based on a suitable training set of data. Such generative models may have a number of advantages for the embodiments described herein.

Deep learning is a type of machine learning. Machine learning can be generally defined as a type of artificial intelligence (AI) that provides computers with the ability to learn without being explicitly programmed. Machine learning focuses on the development of computer programs that can teach themselves to grow and change when exposed to new data. Machine learning explores the study and construction of algorithms that can learn from and make predictions on data-such algorithms overcome following strictly static program instructions by making data driven predictions or decisions, through building a model from sample inputs.

The machine learning described herein may be further performed as described in "Introduction to Statistical Machine Learning," by Sugiyama, Morgan Kaufmann, 2016, 534 pages; "Discriminative, Generative, and Imitative Learning," by Jebara, MIT Thesis, 2002, 212 pages; and "Principles of Data Mining (Adaptive Computation and Machine Learning)" by Hand et al., MIT Press, 2001, 578 pages; which are incorporated by reference as if fully set forth herein. The embodiments described herein may be further configured as described in these references.

In some embodiments, a machine learning system may comprise a neural network. For example, a model may be a deep neural network with a set of weights that model the world according to the data that it has been fed to train it. Neural networks can be generally defined as a computational approach which is based on a relatively large collection of neural units inspired by the neural process of a biological brain that solves problems with relatively large clusters of biological neurons connected by axons. Each neural unit is connected with many others, and links can be enforcing or inhibitory in their effect on the activation state of connected neural units. These systems may be trained (e.g., guided by a loss function for given data) rather than explicitly programmed and excel in areas where the solution or feature detection is difficult to express in a traditional computer program.

Neural networks typically consist of multiple layers, and the signal path traverses from front to back. The goal of the neural network is to solve problems inspired by the way that the human brain would. Modern neural network projects typically work with a few thousand to a few billion neural units and billions of connections. The neural network may have any suitable architecture and/or configuration known in the art.

In a further embodiment, a model may comprise a convolutional and deconvolution neural network. For example, the embodiments described herein can take advantage of learning concepts such as a convolution and deconvolution neural network to solve the normally intractable representation conversion problem (e.g., rendering). The model may have any convolution and deconvolution neural network configuration or architecture known in the art. In some embodiments, image processing tasks as described herein may be performed by a convolutional neural network (CNN), such as a ResNet. A CNN may include several layers, including an input layer, a convolutional layer, an activation layer, a pooling layer, a flattening layer, a fully connected layer, and an output layer. In some configurations, the CNN may include one or more layers of each type.

A neural network, as used herein, may refer to a computing model for analyzing underlying relationships in a set of input data. The neural network may include a set of connected units or nodes (referred to as "neurons"), structured as different layers, where each connection (also referred to as an "edge") may obtain and send a signal between neurons of neighboring layers in a way similar to a synapse in a biological brain. The signal may be any type of data (e.g., a real number). Each neuron may obtain one or more signals as an input and output another signal by applying a non-linear function to the inputted signals. Neurons and edges may typically be weighted by corresponding weights to represent the knowledge the neural network has acquired. During a training process , the weights may be adjusted (e.g., by increasing or decreasing their values) to change the strengths of the signals between the neurons to improve the performance accuracy of the neural network. Different layers of neurons may transform their input signals in different manners (e.g., by applying different non-linear functions or activation functions). The output of the last layer (referred to as an "output layer") may output the analysis result of the neural network, such as, for example, a categorization of the set of input data (e.g., as in image recognition cases), a numerical result, or any type of output data for obtaining an analytical result from the input data. In the case of a generative model, the output may resemble a point on the distribution of the training data.

Training of the neural network, as used herein, may refer to a process of improving the accuracy of the output of the neural network. Typically, the training may be categorized into, for example, supervised training, unsupervised training, and reinforcement training. In the supervised training, a set of target output data (also referred to as "labels" or "ground truth") may be generated based on a set of input data using a method other than the neural network. The neural network may then be fed with the set of input data to generate a set of output data that is typically different from the target output data. Based on the difference between the output data and the target output data, the weights of the neural network may be adjusted in accordance with a rule. If such adjustments are successful, the neural network may generate another set of output data more similar to the target output data in a next iteration using the same input data. If such adjustments are not successful, the weights of the neural network may be adjusted again. After a sufficient number of iterations, the training process may be terminated in accordance with one or more predetermined criteria (e.g., the difference between the final output data and the target output data is below a predetermined threshold, or the number of iterations reaches a predetermined threshold). The trained neural network may be applied to analyze other input data.

In the unsupervised training, the neural network is trained without any external gauge (e.g., labels) to identify patterns in the input data rather than generating labels for them. Typically, the neural network may analyze shared attributes (e.g., similarities and differences) and relationships among the elements of the input data in accordance with one or more predetermined rules or algorithms (e.g., principal component analysis, clustering, anomaly detection, or latent variable identification). The trained neural network may extrapolate the identified relationships to other input data.

In some embodiments, a self-supervised model may be used. A self-supervised model is a type of unsupervised model, meaning that it learns from unlabeled data. The self-supervised model generates its own labels for the data by manipulating the data during training. The data manipulation may include creating a "pretext task" (for example, masking parts of an image) which the model then tries to predict, effectively generating the labels for itself.

In the reinforcement learning, the neural network is trained without any external gauge (e.g., labels) in a trial-and-error manner to maximize benefits in decision making. The input data sets of the neural network may be different in the reinforcement training. For example, a reward value or a penalty value may be determined for the output of the neural network in accordance with one or more rules during training, and the weights of the neural network may be adjusted to maximize the reward values (or to minimize the penalty values). The trained neural network may apply its learned decision-making knowledge to other input data.

During the training of a neural network, a loss function (or referred to as a "cost function") may be used to evaluate the output data. The loss function, as used herein, may map output data of a machine learning model (e.g., the neural network) onto a real number (referred to as a "loss" or a "cost") that intuitively represents a loss or an error (e.g., representing a difference between the output data and target output data) associated with the output data. The training of the neural network may seek to maximize or minimize the loss function (e.g., by pushing the loss towards a local maximum or a local minimum in a loss curve). For example, one or more parameters of the neural network may be adjusted or updated purporting to maximize or minimize the loss function. After adjusting or updating the one or more parameters, the neural network may obtain new input data in a next iteration of its training. When the loss function is maximized or minimized, the training of the neural network may be terminated.

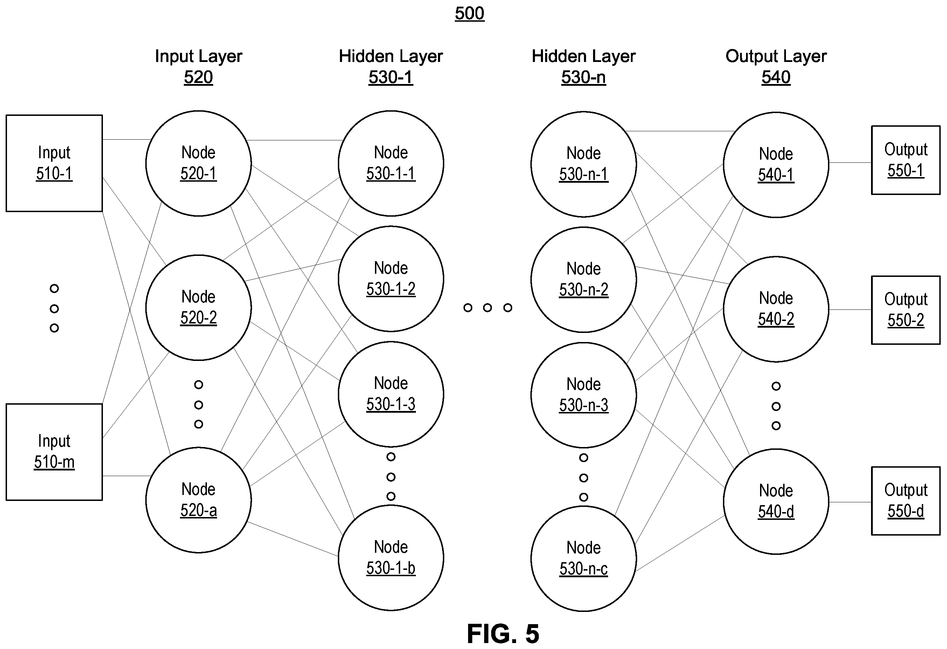

By way of example, **Fig. 5** is a schematic diagram illustrating an example neural network 500, consistent with embodiments of the present disclosure. As depicted in **Fig. 5,** neural network 500 may include an input layer 520 that receives inputs, including input 510-1, ..., input 510-m (m being an integer). For example, an input of neural network 500 may include any structure or unstructured data (e.g., an image). In some embodiments, neural network 500 may obtain a plurality of inputs simultaneously. For example, in **Fig. 5,** neural network 500 may obtain m inputs simultaneously. In some embodiments, input layer 520 may obtain m inputs in succession such that input layer 520 receives input 510-1 in a first cycle (e.g., in a first inference) and pushes data from input 510-1 to a hidden layer (e.g., hidden layer 530-1), then receives a second input in a second cycle (e.g., in a second inference) and pushes data from the second input to the hidden layer, and so on. Input layer 520 may obtain any number of inputs in the simultaneous manner, the successive manner, or any manner of grouping the inputs.

Input layer 520 may include one or more nodes, including node 520-1, node 520-2, ..., node 520-a (a being an integer). A node (also referred to as a "machine perceptron" or a "neuron") may model the functioning of a biological neuron. Each node may apply an activation function to received inputs (e.g., one or more of input 510-1, ..., input 510-m). An activation function may include a Heaviside step function, a Gaussian function, a multiquadratic function, an inverse multiquadratic function, a sigmoidal function, a rectified linear unit (ReLU) function (e.g., a ReLU6 function or a Leaky ReLU function), a hyperbolic tangent ("tanh") function, or any non-linear function. The output of the activation function may be weighted by a weight associated with the node. A weight may include a positive value between 0 and 1, or any numerical value that may scale outputs of some nodes in a layer more or less than outputs of other nodes in the same layer.

As further depicted in **Fig. 5,** neural network 500 includes multiple hidden layers, including hidden layer 530-1, ..., hidden layer 530-n (n being an integer). When neural network 500 includes more than one hidden layer, it may be referred to as a "deep neural network" (DNN). Each hidden layer may include one or more nodes. For example, in **Fig. 5,** hidden layer 530-1 includes node 530-1-1, node 530-1-2, node 530-1-3, ..., node 530-1-b (b being an integer), and hidden layer 530-n includes node 530-n-1, node 530-n-2, node 530-n-3, ..., node 530-n-c (c being an integer). Similar to nodes of input layer 520, nodes of the hidden layers may apply the same or different activation functions to outputs from connected nodes of a previous layer, and weight the outputs from the activation functions by weights associated with the nodes.

As further depicted in **Fig. 5,** neural network 500 may include an output layer 540 that finalizes outputs, including output 550-1, output 550-2, ..., output 550-d (d being an integer). Output layer 540 may include one or more nodes, including node 540-1, node 540-2, ..., node 540-d. Similar to nodes of input layer 520 and of the hidden layers 530, nodes of output layer 540 may apply activation functions to outputs from connected nodes of a previous layer and weight the outputs from the activation functions by weights associated with the nodes.

Although nodes of each hidden layer of neural network 500 are depicted in Fig. 5 to be connected to each node of its previous layer and next layer (referred to as "fully connected"), the layers of neural network 500 may use any connection scheme. For example, one or more layers (e.g., input layer 520, hidden layer 530-1, ..., hidden layer 530-n, or output layer 540) of neural network 500 may be connected using a convolutional scheme, a sparsely connected scheme, or any connection scheme that uses fewer connections between one layer and a previous layer than the fully connected scheme as depicted in **Fig. 5.**

Moreover, although the inputs and outputs of the layers of neural network 500 are depicted as propagating in a forward direction (e.g., being fed from input layer 520 to output layer 540, referred to as a "feedforward network") in **Fig. 5,** neural network 500 may additionally or alternatively use backpropagation (e.g., feeding data from output layer 540 towards input layer 520) for other purposes. Accordingly, although neural network 500 is depicted similar to a convolutional neural network (CNN), neural network 500 may include a recurrent neural network (RNN) or any other neural network.

As stated above, defect inspection can be performed by using tools that measure the fabricated structures in the different steps of the microchip production, such as imaging with optical devices or charged particles (e.g., charged-particle beam inspection tools). Defect inspection includes identification, localization, analysis, and classification of different types of defects. Defects can occur due to various factors including material quality, impurities, contaminations, miss calibrated tools, stochastic defects to name a few. To be able to improve the manufacturing process, it is necessary to identify the causes of defects, which can benefit from pixel-wise classification of the defects.

Current methods for finding and identifying the pixels belonging to a defect are based on unsupervised and supervised machine learning and classical segmentation algorithms. Classical segmentation algorithms may be used, and the most advanced methods are based on some statistical information calculated from an analyzed image. This is the case for methods based on thresholding, edge detection, and region extraction. However, these models are not robust to different possible variabilities of semiconductor images, such as high noise, distortions, misalignment, and feature variabilities. These methodologies present difficulties in classifying the defective pixels when the image quality is not high.

Supervised machine learning capabilities are dependent on the quality and domain of the data used during training of the models. In the case of the semiconductor domain, there is limited data that contains labels of the defects at the pixel-classification level. Producing such datasets with the segmentation masks of the defects is costly and prone to human errors. Unsupervised machine learning techniques rely on clustering that depends on the metric that defines the distance between different sets of instances. Another option is methods based on producing a latent representation, such as using autoencoders. While such models can perform the anomaly detection, it becomes challenging to resolve the pixel classification with high accuracy by deploying metrics over the latent space.

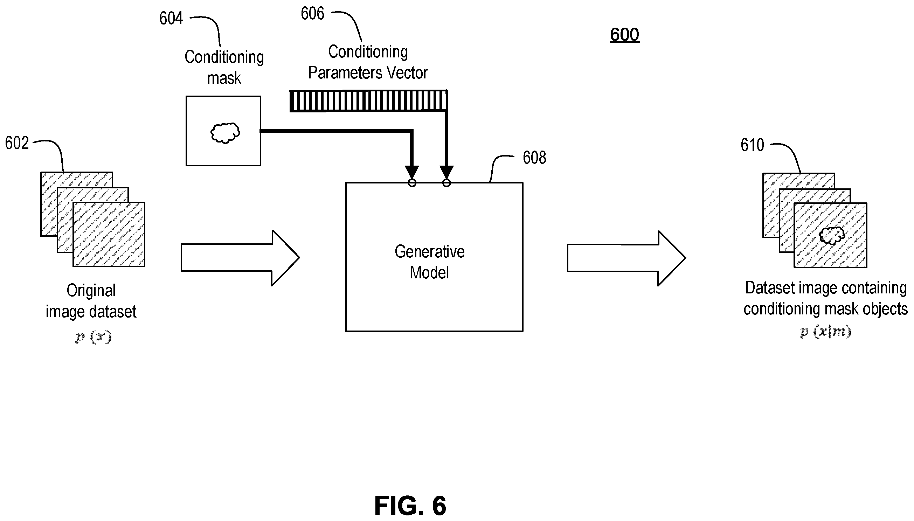

Embodiments of the present disclosure can provide a method for obtaining segmentation of images and performing classification of defective structures in images produced by defect inspection or metrology. **Fig. 6** is a flow diagram of a process 600 for generating images with defects using a generative model, consistent with embodiments of the present disclosure. An original image data set 602 includes a plurality of images without labels for features represented in the images. In some instances, the original images 602 may contain noise making it difficult to determine whether the original image 602 contains a defect. For example, subtracting the original image from a test image that may contain a defect may not be effective in determining whether the test image actually contains a defect if the original image or the test image is noisy and the defect is small (e.g., the defect may be obscured by noise in the test image).

The original image data set 602, a conditioning mask 604 including the feature to be identified (e.g., the defect to be detected), and conditioning parameters 606 are provided to a generative model 608.

In some embodiments, the conditioning mask 604 may include a single feature (as shown in **Fig. 6).** In other embodiments, the conditioning mask 604 may include multiple features. In some embodiments, the conditioning mask 604 includes features that are similar to the features to be identified during inference (e.g., the conditioning mask 604 does not need to be an exact match for the features to be identified). The conditioning mask may include a definition of what a meaningful variation in the data is, such that it is not considered to be a normal variation in the data. The term "meaningful variation" indicates that a defect is determined to be a defect, which is different from a normal manufacturing variation, which may be an acceptable variation in the image. As the ultimate goal is to detect actual defects, the conditioning mask 604 is inherently labeled (i.e., it is inherent that the conditioning mask 604 includes a defect).

In some embodiments, the conditioning parameters 606 may be provided as a vector (as shown in **Fig. 6).** In other embodiments, other types of data structures for representing the conditioning parameters 606 may be used. The conditioning parameters 606 may include information such as settings and general configuration information to describe the feature in the conditioning mask 604 because the mask alone may not be sufficient to describe the feature. For example, the conditioning parameters 606 may indicate whether the feature in the conditioning mask 604 is to be added to the generated image or removed from the generated image. In such circumstances, the same conditioning mask 604 may be used to generate both types of images. The conditioning parameters 606 may also include information such as gray-level properties (e.g., intensity) of the mask, materials used in the mask, a position of the masked feature in the image to be generated, and a size of the masked feature in the image to be generated.

The generative model 608 may be any type of generative model, including any one of a diffusion model, an autoencoder model (e.g., a variational autoencoder), a generative adversarial network, or a statistical/probabilistic model. It is noted that the methods and systems described in the present disclosure function in a similar manner regardless of the type of generative model used. Any type of generative model 608 that can generate a new image based on the original image 602 and the conditioning mask 604 may be used. The generative model 608 generates a second dataset 610 including images with the feature shown in the conditioning mask 604. For example, the second dataset 610 may include images with the feature in the conditioning mask 604 in various sizes, various positions, and various feature intensities (e.g., different gray-level values for the feature in the generated image) based on the conditioning parameters 606. In some embodiments, the conditioning mask 604 may be different for each image in the set of images.

After the second dataset 610 is generated, there are effectively three labeled images: the original image 602 (labeled as "no defect," because these images are known to have no defects), the conditioning mask 604 (labeled as "has defect," because the masked feature is the defect), and the new generated images in the second dataset 610 (labeled as "has defect," because these images were specifically generated to include the defect).

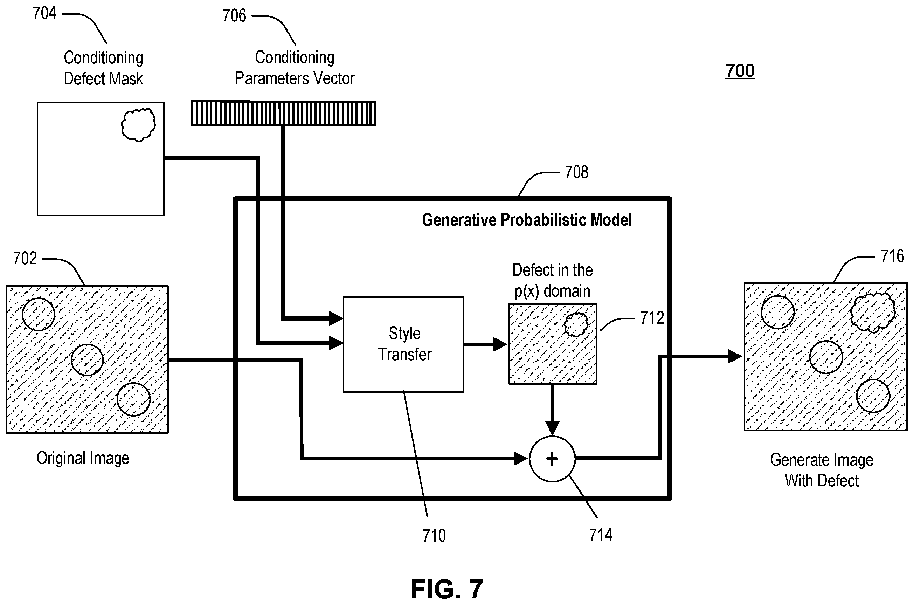

**Fig. 7** is a flow diagram of a process 700 for generating images with defects using a style transfer generative model, consistent with embodiments of the present disclosure. An original image 702, a conditioning mask 704 including the feature to be identified (e.g., the defect to be detected), and conditioning parameters 706 are provided to a generative model 708. The generative model 708 may include a style transfer model 710 and an aggregator 714.

In some embodiments, the conditioning mask 704 may include a single feature (as shown in **Fig. 7).** In other embodiments, the conditioning mask 704 may include multiple features. In some embodiments, the conditioning mask 704 includes features that are similar to the features to be identified during inference (e.g., the conditioning mask 704 does not need to be an exact match for the features to be identified). In some embodiments, the conditioning mask 704 may be similar to the conditioning mask 604 described in connection with **Fig. 6.** In some embodiments, the conditioning mask 704 may be different for each image in the set of images.

In some embodiments, the conditioning parameters 706 may be provided as a vector (as shown in **Fig. 7).** In other embodiments, other types of data structures for representing the conditioning parameters 706 may be used. The conditioning parameters 706 may include information such as settings and general configuration information to describe the feature in the conditioning mask 704 because the mask alone may not be sufficient to describe the feature. For example, the conditioning parameters 706 may indicate whether the feature in the conditioning mask 704 is to be added to the generated image or removed from the generated image. In such circumstances, the same conditioning mask 704 mask be used to generate both types of images. In some embodiments, the conditioning parameters 706 may be similar to the conditioning parameters 606 described in connection with **Fig. 6.**

The style transfer model 710 takes the style of the original image 702 and uses it as a "template" to generate new images in the same style as the original image 702. In some embodiments, the style transfer model 710 may be previously trained using the original image 702 to determine the style of the original image 702. The trained style transfer model 710 applies the conditioning mask 704 and the conditioning parameters 706 to generate an image 712 or a representation of image 712 containing the feature shown in the conditioning mask 704 but in the style of the original image 702. It is noted that the term "image" is used to indicate the output of the style transfer model 710; in some embodiments, the output of the style transfer model 710 may include a generated image and a mathematical representation of the generated image. In some embodiments, the conditioning parameters 706 may be used to "condition" the style transfer model 710, so that the style transfer model 710 has the same properties as the original image 702. For example, the conditioning parameters 706 may include statistics of the original image 702 and may include characteristics of the defect representation that is not captured by the conditioning mask 704.

The aggregator 714 combines the original image 702 and the generated image 712 into a generated image 716 including the features of the original image 702 and the feature shown in the conditioning mask 704. Because the generated image 712 is generated in the style of the original image 702, the two images can be readily combined by the aggregator 714 into the generated image 716. In some embodiments, a different type of aggregator 714 (e.g., different than an addition operation, such as averaging) may be used to combine the generated image 712 and the original image 702 into the generated image 716. In other embodiments, other types of aggregators may be used to combine the generated image 712 and the original image 702 into the generated image 716.

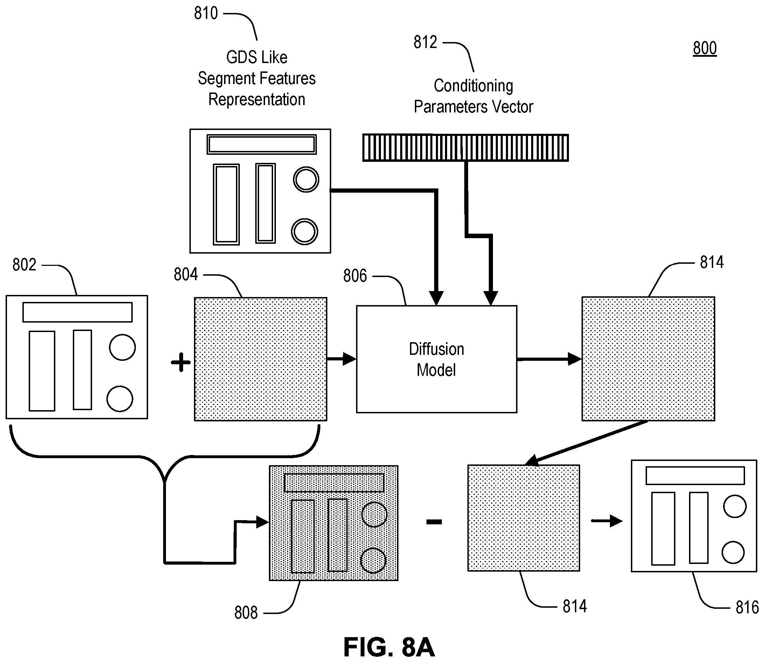

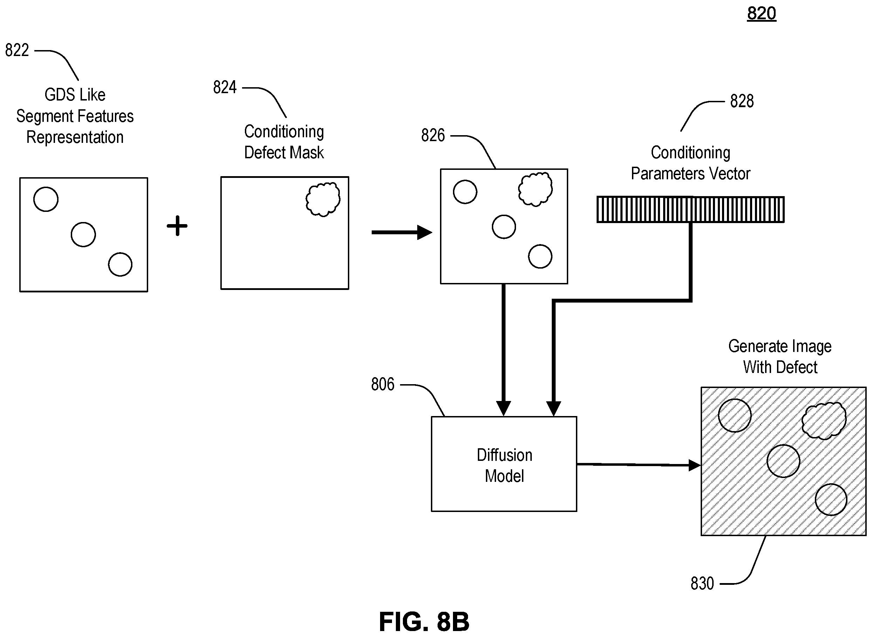

**Figs. 8A** and **8B** are flow diagrams of processes for generating images with defects using a diffusion model, consistent with embodiments of the present disclosure. **Fig. 8A** is a flow diagram of a training process 800 to remove noise from images, consistent with embodiments of the present disclosure. An original image 802 and noise 804 are provided to a diffusion model 806. The diffusion model 806 is trained to remove the noise 804 to attempt to recreate the original image 802. For example, in an intermediate step, a noisy image 808 may be generated, which combines the original image 802 and the noise 804. To further assist in training the diffusion model 806, a GDS image 810 and conditioning parameters 812 may be provided.

In some embodiments, the GDS image 810 may be a design file that represents an image of the features as intended to be produced. Because the original image 802 may include manufacturing variances and noise introduced via taking a CPBI image, the GDS image may be "clearer" than the original image 802. In some embodiments, the conditioning parameters 812 may be provided as a vector (as shown in **Fig. 8A).** In other embodiments, other types of data structures for representing the conditioning parameters 812 may be used. The conditioning parameters 812 may include information such as settings and general configuration information to describe the features in the GDS image 810 because the GDS image alone may not be sufficient to describe the features. In some embodiments, the conditioning parameters 812 may be similar to the conditioning parameters 606 described in connection with **Fig. 6.**

To train the diffusion model 806, a different level of noise is added to the original image 802 at each training sample. For each training iteration, a batch of data including multiple training samples is collected. Each training sample in the batch is a higher quality image combined with a random level of noise. The output of the neural network for the sample (e.g., predicted noise 814) is the random level of noise added to the sample (e.g., noise 804). The diffusion model 806 is built such that during inference, the diffusion model can start with a noisy input image and can determine the amount of noise that was introduced in the noisy input image. The diffusion model 806 can then remove the noise from the noisy input image to obtain a higher quality image as the end result (e.g., predicted image 816).

The diffusion model 806 may repeat the training process 800 until a convergence criteria is met. For example, the convergence criteria may be met if a difference between successively predicted images 816 is lower than a first threshold. As another example, the convergence criteria may be met if a difference between the predicted image 816 and the original image 802 is lower than a second threshold. As another example, the convergence criteria may be met if a difference between the input noise (e.g., noise 804) and the predicted noise 814 is lower than a third threshold.

**Fig. 8B** is a flow diagram of an image generation process 820 using the trained diffusion model 806, consistent with embodiments of the present disclosure. After the diffusion model 806 is trained using the process 800, the diffusion model 806 may be used to generate images containing defects in a similar manner as the generative model 708 described in connection with **Fig. 7.** A GDS image 822 and a conditioning mask 824 may be combined to generate an image 826 including the defect. In some embodiments, the GDS image 822 may be a design file that represents an image of the features as intended to be produced. In some embodiments, another type of representation (e.g., a mask) of the features may be used instead of the GDS image 822. In some embodiments, the conditioning mask 824 may include a single feature (as shown in **Fig. 8B).** In other embodiments, the conditioning mask 824 may include multiple features. In some embodiments, the conditioning mask 824 includes features that are similar to the features to be identified during inference (e.g., the conditioning mask 824 does not need to be an exact match for the features to be identified). In some embodiments, the conditioning mask 824 may be similar to the conditioning mask 604 described in connection with **Fig. 6.**

The conditioning parameters 828 and the image 826 including the defect may be provided to the diffusion model 806 to generate a final image 830 containing the defect. In some embodiments, the conditioning parameters 828 may be provided as a vector (as shown in **Fig. 8B).** In other embodiments, other types of data structures for representing the conditioning parameters 828 may be used. The conditioning parameters 828 may include information such as settings and general configuration information to describe the features in the GDS image 822 because the GDS image alone may not be sufficient to describe the features. In some embodiments, the conditioning parameters 828 may include style information relating to the GDS image 822 or relating to a desired output image style. In some embodiments, the conditioning parameters 828 may be similar to the conditioning parameters 606 described in connection with **Fig. 6.** In other embodiments, the diffusion model 806 may be trained to generate images in the desired output image style. For example, the final image 830 may be generated in the style of the original image 802.

It is appreciated that training and inferencing functionalities of a neural network may be performed by separate devices. For instance, training a neural network is typically more computationally intensive, and the training can be performed by a server (e.g., server 400) or a server farm. Inferencing is typically less computationally intensive, and it could be performed by another device such as controller 109, image processing system 250, or image processing system 390.

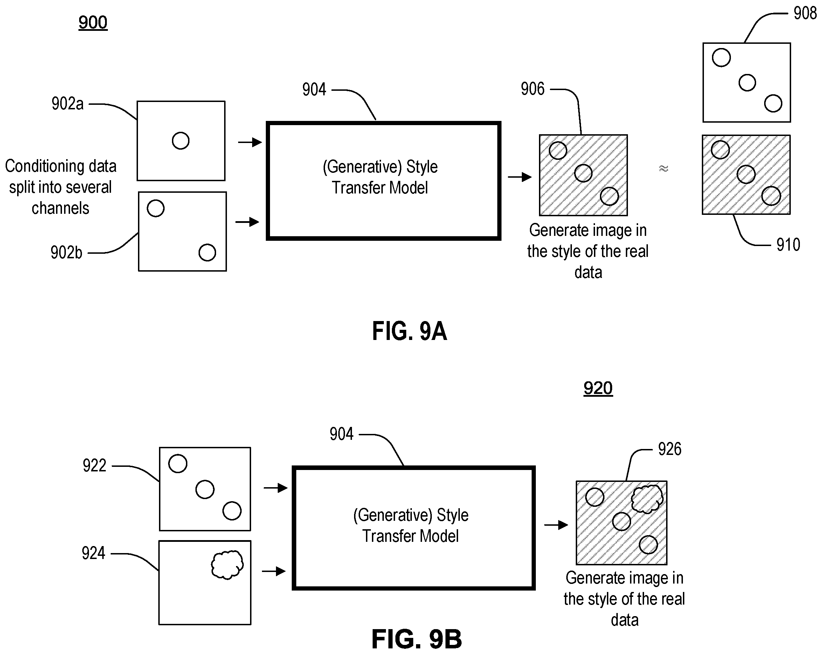

**Figs. 9A** and **9B** are flow diagrams of processes for generating images with defects using a generative style transfer model, consistent with embodiments of the present disclosure. **Fig. 9A** is a flow diagram of a training process 900, consistent with embodiments of the present disclosure. Conditioning images 902a, 902b may be provided to a generative style transfer model 904. In some embodiments, the conditioning images 902 may be split into several different channels, each channel represented by a different conditioning image (e.g., conditioning images 902a, 902b). It is noted that while two conditioning images are shown in **Fig. 9A,** any number of conditioning images may be used without altering the operation of the process 900. In some embodiments, the generative style transfer model 904 may be a generative model, similar to the generative model 708 described in connection with **Fig. 7.** In other embodiments, the generative style transfer model 904 may be a diffusion model, similar to the diffusion model 806 described in connection with **Figs. 8A** and **8B.**

The generative style transfer model 904 may combine the conditioning images 902a, 902b and apply the style model to generate an image 906 that includes all the features of the conditioning images 902a, 902b in the style of a "real" image. To verify the output of the generative style transfer model 904, the image 906 may be compared with a GDS image 908 of the design and measured data 910 (e.g., a CPBI image of the wafer).

**Fig. 9B** is a flow diagram of an image generation process 920 using the trained generative style transfer model 904, consistent with embodiments of the present disclosure. After the generative style transfer model 904 is trained using the process 900, the generative style transfer model 904 may be used to generate images containing defects in a similar manner as the generative model 708 described in connection with **Fig. 7.** A GDS image 922 and a conditioning mask 924 may be combined by the generative style transfer model 904 to generate an image 926 including the defect in the style of a "real" image. In some embodiments, the GDS image 922 may be a design file that represents an image of the features as intended to be produced. In some embodiments, the conditioning mask 924 may include a single feature (as shown in **Fig. 9B).** In other embodiments, the conditioning mask 924 may include multiple features. In some embodiments, the conditioning mask 924 includes features that are similar to the features to be identified during inference (e.g., the conditioning mask 924 does not need to be an exact match for the features to be identified).

In some embodiments, a generative model with conditioning capabilities (as described in connection with **Figs. 6-9B)** may utilize one or more of the following: Fourier domain adaptation, generative models (e.g., StyleGAN, diffusion, ControlNet, Normalizing Flow, conditional variational autoencoder), or statistical alignment of real data.

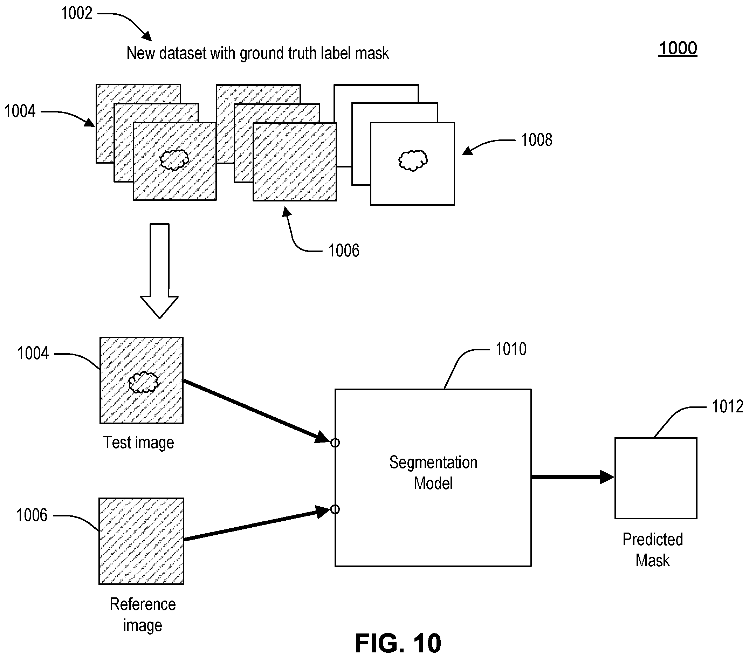

**Fig. 10** is a flow diagram of a process 1000 to predict a mask using a segmentation model, consistent with embodiments of the present disclosure. A dataset 1002 includes a set of test images 1004, a set of reference images 1006, and a set of mask images 1008. The dataset 1002 may include labeled images for each of the test image 1004, the reference image 1006, and the mask image 1008.

Using the generated dataset 1002 for difference segmentation, a segmentation model 1010 with a specific architecture may be trained to learn the segmentation task by detecting meaningful differences between a test image 1004 and a reference image 1006, and output a predicted mask 1012 representing a defect. The segmentation model 1010 is trained to learn the segmentation of the test image 1004 (e.g., to identify the defect present in the test image 1004) by comparing the reference image 1006 with the test image 1004. The predicted mask 1012 generated by the segmentation model 1010 should be close to the mask image 1008 from the dataset 1002. To produce a robust model that is able to better generalize, a loss function may be used that considers the symmetries present in the segmentation task. The loss function represents the difference between the predicted mask 1012 and the true mask (e.g., the mask image 1008 from the dataset 1002). The symmetries in the segmentation task may be enforced during training of the segmentation model 1010 through the loss function, which may be calculated based on the formula:

$$L\left(x_{ij}, \{\hat{x}_{ij}^{a}\}\right) = N^{-1} \sum_{\alpha} F\left(x_{ij}, \hat{x}_{ij}^{a}\right) + \binom{N}{2}^{-1} \sum_{\alpha < \beta} G\left(\hat{x}_{ij}^{a}, \hat{x}_{ij}^{\beta}\right) \qquad \text{Equation (1),}$$

where F is a distance measure of the ground truth and the predicted value by the model, G is a constraint over predictions performed over different symmetries that the input data presents, $\alpha$ is a set of possible transformations, and $\beta$ is a different set of transformations. N = $|\hat{x}^{\alpha}|$ gives the dimension of the set of symmetry operations. Using such a loss function allows the model to learn the meaningful differences between the two input images while learning to become rotation, translation, scaling, or shearing equivariant.

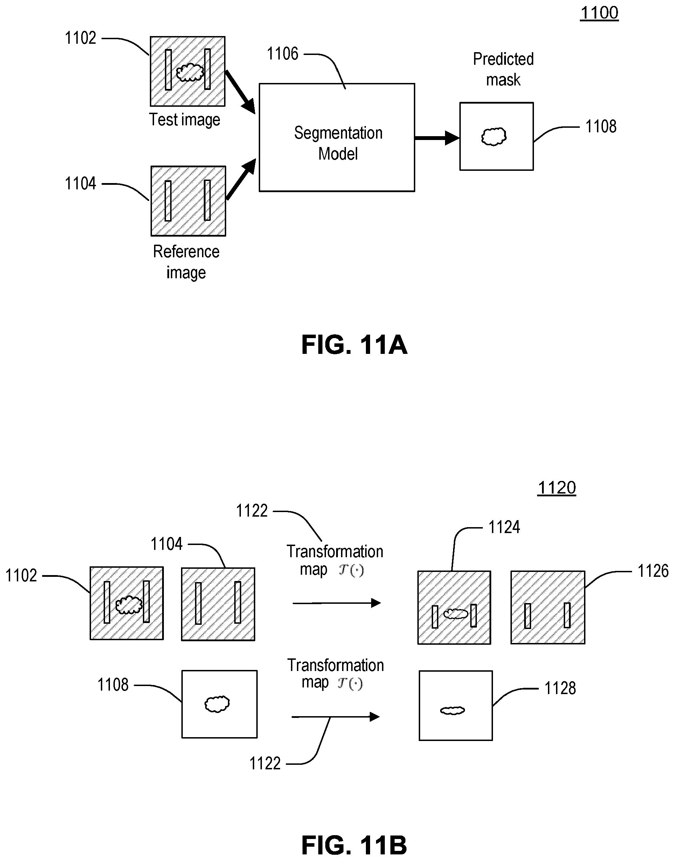

**Figs. 11A-11C** are flow diagrams of processes to predict a mask from transformed images using a segmentation model, consistent with embodiments of the present disclosure. Any image to image transformation map $\tau(\cdot)$ that perturbs the input images (e.g., affine, location dependent) may be used. The trained segmentation model may be used to predict a defect mask under the same transformation $\tau(\cdot)$ as applied to the input image.

**Fig. 11A** shows a flow diagram of a process 1100 to predict a mask using a segmentation model, consistent with embodiments of the present disclosure. A test image 1102 and a reference image 1104 are provided to a segmentation model 1106, which is trained to predict a mask image 1108. The process 1100 may operate in a similar manner as the process 1000 described in connection with **Fig. 10.**

**Fig. 11B** shows a flow diagram of a process 1120 for transforming an image using a transformation map $\tau(\cdot)$, consistent with embodiments of the present disclosure. A transformation map $\tau(\cdot)$ 1122 is applied to the test image 1102 to generate a transformed test image 1124. The transformation map $\tau(\cdot)$ 1122 is also applied to the reference image 1104 to generate a transformed reference image 1126. The transformation map $\tau(\cdot)$ 1122 may also be applied to the predicted mask image 1108 to generate a transformed predicted mask image 1128. Because the test image 1102 has been transformed by the transformation map $\tau(\cdot)$ 1122, all the features in the test image 1102 (including the mask image 1108) should be transformed in a similar manner.

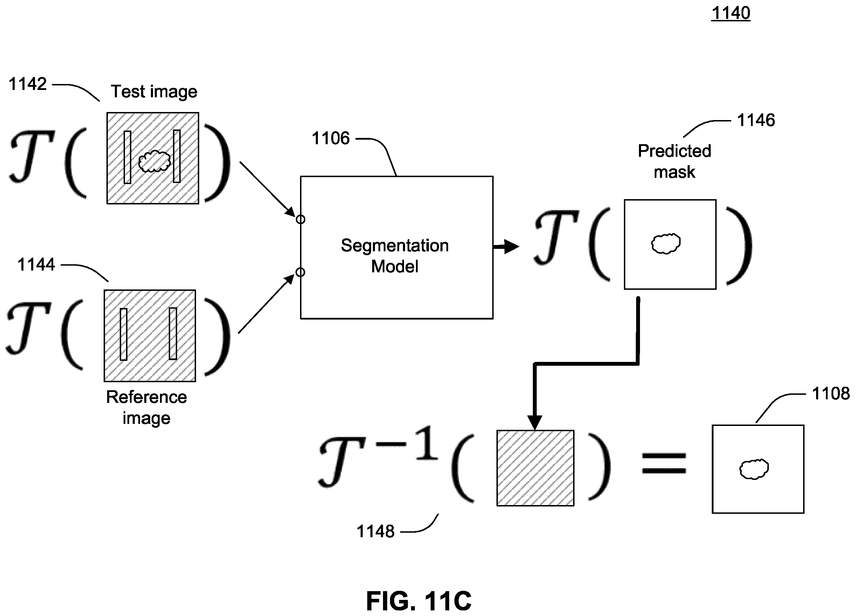

**Fig. 11C** shows a flow diagram of a process 1140 to predict a mask from a transformed image using the segmentation model, consistent with embodiments of the present disclosure. A transformed test image 1142 and a transformed reference image 1144 are provided to the segmentation model 1106, which is trained to predict a transformed mask image 1146. Applying an inverse transformation 1148 to the predicted transformed mask image 1146 generates the original (e.g., non-transformed) predicted mask image 1108.

During training of the models (e.g., any one of models 608, 708, 806, 904, 1010, or 1106), normal variations of possible defects are learned. During inference, the models do not segment out features (e.g., defects) that were not identified during training.

In some embodiments, the trained models may be used to find defects in images or to identify features in images. The segmentation models may be used to calculate feature dimensions and may also be used in connection with other processes related to defect inspection or metrology.

**Fig. 12** is a flowchart of an example method 1200 of identifying defects on a wafer under inspection, consistent with embodiments of the present disclosure. In some embodiments, the method 1200 may be performed by image processing system 250 of **Fig. 2,** image processing system 390 of **Fig. 3,** or server 400 of **Fig. 4.**

At step 1202, a first set of images containing a conditioning mask may be generated. For example, the first set of images may include a defect or a feature to be detected as represented in the conditioning mask. In some embodiments, the first set of images may be generated by any one of: process 600 as described in connection with **Fig. 6A,** process 700 as described in connection with **Fig. 7,** processes 800 or 820 as described in connection with **Figs. 8A-8B,** or processes 900 or 920 as described in connection with **Figs. 9A-9B.**

At step 1204, labels for the first set of images may be generated. In some embodiments, the labels may be generated by process 600 as described in connection with **Fig. 6.**

At step 1206, a defect in a second set of images may be predicted. In some embodiments, the prediction may be performed using a segmentation model trained on the set of labeled images. In some embodiments, the prediction may be made by any one of: process 1000 as described in connection with **Fig. 10,** or processes 1100, 1120, or 1140 as described in connection with **Figs. 11A-11C.**

It is sometimes desirable to increase image quality, for example, to increase the image quality of a CPBI image. From a lower resolution image, it may be possible to generate a corresponding higher resolution image. This was previously achieved using a one-to-one deterministic mapping of the lower resolution image to the higher resolution image (e.g., only one higher resolution image would be derived from a lower resolution image). In practice, the one-to-one mapping defines an ill-posed problem and multiple solutions with various degrees of probability exist (e.g., one lower resolution image can map to many different higher resolution images). This results from the fact that multiple physical structures can produce the same or similar lower quality image data.

For example, there may be some information missing from the lower resolution image, but this missing information cannot be created from nothing (i.e., the missing information cannot be provided by a model). There is a probability distribution of possible higher resolution images that could be generated from a given lower resolution image. Another problem results from the need to generate data producing lower resolution and higher resolution image pairs to perform the training of other machine learning models used for metrology and defect inspection. Generating the image pairs can be costly, in terms of time and computational costs, and the trained machine learning models may not generalize well when applied to structures not seen during training.

Providing high resolution images may be useful to aid in further image processing steps (e.g., performing high resolution defect inspection on an image of a wafer, performing a faster wafer scan, and recovering the image quality needed for metrology or other wafer processing steps).

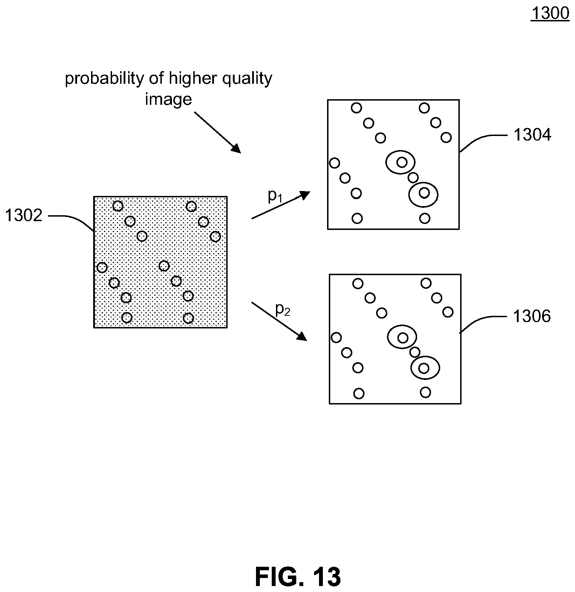

Embodiments of the present disclosure can also provide a method of image quality enhancement (e.g., for CPBI images). **Fig. 13** is an example 1300 of a lower resolution image corresponding to two different higher resolution images, consistent with embodiments of the present disclosure. A lower resolution image 1302 may correspond to a first higher resolution image 1304 with a probability of $p_1$ and to a second higher resolution image 1306 with a probability of $p_2$.

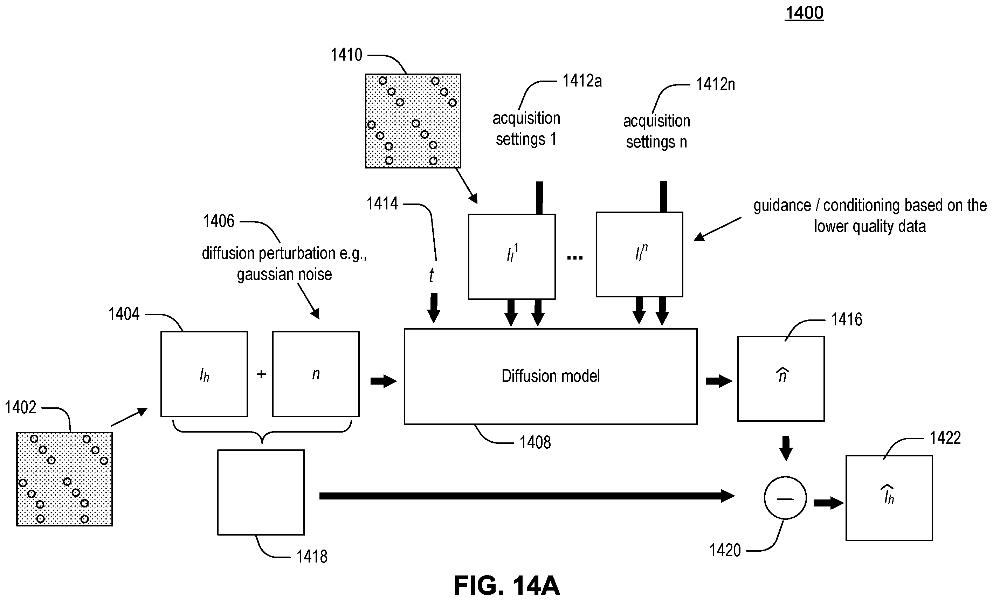

In some embodiments, a diffusion-based model may be trained to learn the distribution of possible higher resolution image data given lower resolution image data examples. A schematic view of one implementation of the model is shown in **Figs. 14A-14B.**

The proposed scheme may be built using several types of data, for example:

(1) Paired higher resolution and lower resolution experimental image data, in which one or more versions of lower resolution image data are measured. A higher resolution equivalent image is also required to be measured.
(2) Lower resolution experimental image data and synthesized higher resolution image data, in which one or more versions of lower resolution image data are measured. A procedure is used to generate a higher resolution equivalent image for each of the lower resolution measured images.
(3) Measure higher resolution image data and remap to a lower resolution image equivalent, using, e.g., blurring, down-sampling, or adding noise. Additionally, the same higher resolution image data may be used with minor (e.g., physically realistic) changes on top of the image that map to the same lower resolution equivalent image as additional training data.

**Fig. 14A** is a flow diagram of a process 1400 for training a diffusion model to predict higher resolution images from a lower resolution input image, consistent with embodiments of the present disclosure.

A higher resolution input image 1402 (also shown generically as higher resolution input image $I_h$ 1404) and noise 1406 (e.g., Gaussian noise, which may be added to the input image $I_h$ 1404 as a diffusion perturbation) are provided to a diffusion model 1408. The diffusion model 1408 receives additional inputs, including a lower resolution input image 1410 and associated acquisition settings $I_l^1$-$I_l^n$ 1412a-1412n. The acquisition settings may include guidance or conditioning information for the diffusion model 1408 based on the lower resolution input image 1410. The acquisition settings 1412 may include different options for the blurriness of the lower resolution input image 1410. For example, if the same structure with different options for the blurriness is presented in the lower resolution input image 1410, the diffusion model 1408 can extract more information out of the data. As another example, the acquisition settings 1412 may include different focus information or different energy levels for the lower resolution input image 1410. Adding information via the acquisition settings 1412 that helps during the reconstruction process performed by the diffusion model 1408 helps the output of the diffusion model to be more precise.

It is noted that while two sets of acquisition settings are shown in **Fig. 14A,** any number of sets of acquisition settings may be provided to the diffusion mode 1408. Additional input information, such as a noise level (t) 1414 that is added to the input image 1404 may be provided to the diffusion model 1408 for additional guidance or conditioning. In some embodiments, there may be T levels of noise to be added to the original image 1404 and t = 1, ..., T represents a noise level used at a given instance.

The diffusion model 1408 generates predicted noise $\hat{n}$ 1416. The higher resolution input image $I_h$ 1404 and the noise 1406 are combined to generate a noisy image 1418. A subtractor 1420 subtracts the predicted noise $\hat{n}$ 1416 from the noisy image 1418 to generate a predicted higher resolution image $\widehat{I_h}$ 1422.

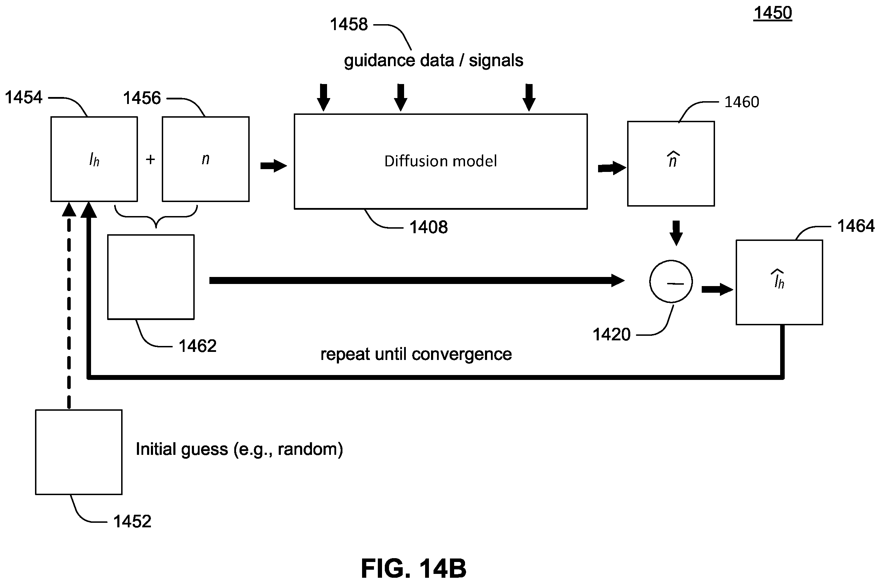

**Fig. 14B** is a flow diagram of a process 1450 for using a trained diffusion model for inference to predict higher resolution images from a lower resolution input image, consistent with embodiments of the present disclosure.

An initial guess 1452 (e.g., a random guess) is made for the higher resolution input image $I_h$ 1454. The higher resolution input image $I_h$ 1454 and noise 1456 (e.g., Gaussian noise) are provided to the trained diffusion model 1408. The diffusion model 1408 receives additional inputs, including guidance data or additional signals 1458. In some embodiments, the guidance data 1458 may include the noise level, for example, the noise level t 1414.

The diffusion model 1408 generates predicted noise $\hat{n}$ 1460. The higher resolution input image $I_h$ 1454 and the noise 1456 are combined to generate a noisy image 1462. The subtractor 1420 subtracts the predicted noise $\hat{n}$ 1460 from the noisy image 1462 to generate a predicted higher resolution image $\widehat{I_h}$ 1464. The process 1450 repeats until a convergence criteria is reached. In some embodiments, the convergence criteria may include a difference between the predicted noise $\hat{n}$ 1460 from subsequent images is below a threshold value. For example, when the difference between the predicted noise $\hat{n}$ 1460 between subsequent images drops below the threshold, the process 1450 may stop. In some embodiments, the convergence criteria may include repeating the process 1450 for a predetermined number of steps.

After the diffusion model 1408 is trained, it can be used to generate possible sample higher resolution images that match with the lower resolution input image. By generating a large enough number of sample higher resolution images, the whole distribution of possible higher resolution images that match with the lower resolution input image may be mapped.

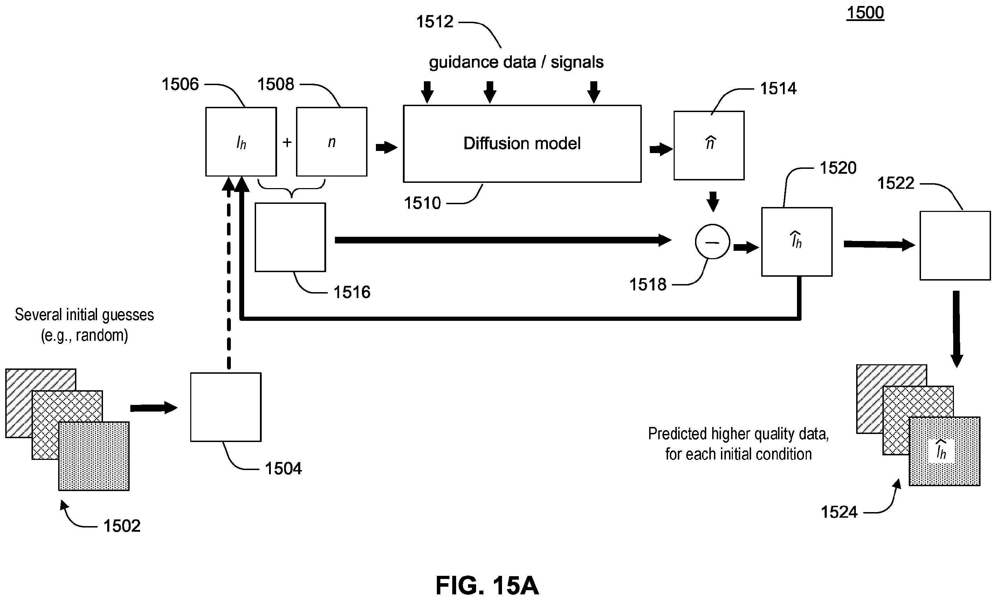

**Fig. 15A** is a flow diagram of a process 1500 for generating higher resolution image samples from a lower resolution input image, consistent with embodiments of the present disclosure. A set 1502 of initial guesses is generated. Using the set 1502 of initial guesses produces a separate estimated higher resolution image for each random seed (shown in **Fig. 15A** by the different squares of the set 1502). In some embodiments, the set 1502 represents how diverse the estimated images may be; it is expected that the estimated images will be similar to each other.

The set 1502 of initial guesses is provided one at a time as an initial guess 1504 for the higher resolution input image $I_h$ 1506. The higher resolution input image $I_h$ 1506 and noise 1508 (e.g., Gaussian noise) are provided to a trained diffusion model 1510. The diffusion model 1510 receives additional inputs, including guidance data or additional signals 1512.

The diffusion model 1510 generates predicted noise $\hat{n}$ 1514. The higher resolution input image $I_h$ 1506 and the noise 1508 are combined to generate a noisy image 1516. A subtractor 1518 subtracts the predicted noise $\hat{n}$ 1514 from the noisy image 1516 to generate a predicted higher resolution image $\widehat{I_h}$ 1520. The process 1500 repeats until a convergence criteria is reached. In some embodiments, the convergence criteria may include a difference between the predicted noise $\hat{n}$ 1514 from subsequent images is below a threshold value. For example, when the difference between the predicted noise $\hat{n}$ 1514 between subsequent images drops below the threshold, the process 1500 may stop. In some embodiments, the process 1500 may repeat for a predetermined number of iterations. Each predicted higher resolution image $\widehat{I_h}$ 1520 (e.g., the predicted higher resolution image $\widehat{I_h}$ 1520 corresponding to one of the initial guesses of the set 1502) is output as predicted image 1522 and collected as a set of predicted higher resolution images $\widehat{I_h}$ 1524.

After obtaining the set of predicted higher resolution images $\widehat{I_h}$ 1524, the higher resolution images may be used for metrology or defect inspection.

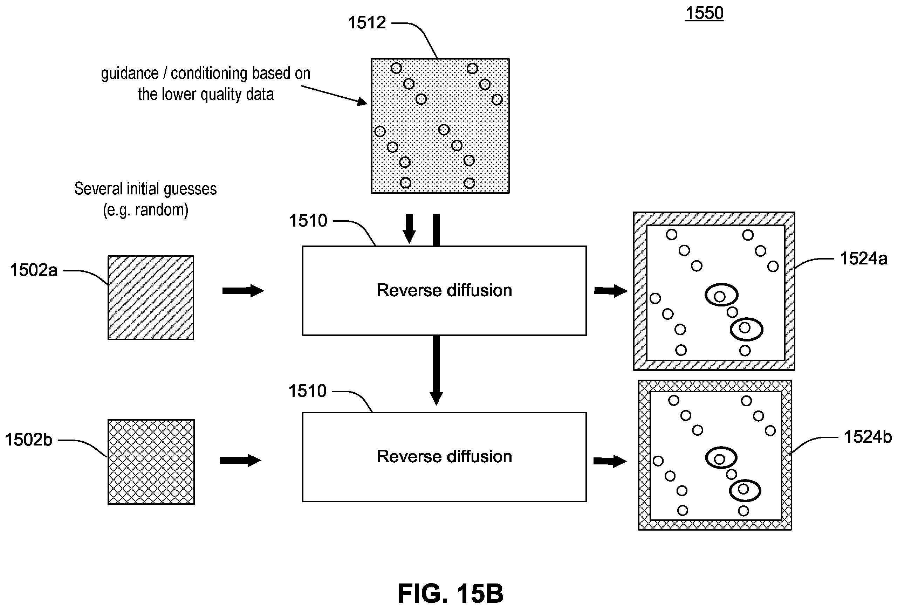

**Fig. 15B** is a flow diagram of an example process 1550 for generating higher resolution images using the process 1500 of **Fig. 15A,** consistent with embodiments of the present disclosure. As a first example, a first initial guess 1502a is input to the diffusion model 1510 along with conditioning information 1512 based on a lower resolution image. The diffusion model 1510 generates a first predicted higher resolution image $\widehat{I_h}$ 1524a. As a second example, a second initial guess 1502b is input to the diffusion model 1510 along with conditioning information 1512 based on the lower resolution image. The diffusion model 1510 generates a second predicted higher resolution image $\widehat{I_h}$ 1524b.

In some embodiments, the trained diffusion model 1510 generates higher resolution image data by modeling the whole distribution of possible results, allowing for an improved view on the possible features observed in the lower resolution image data. The trained diffusion model 1510 can generate a probability distribution of possible higher resolution images given a lower resolution image as input. Thus, a user can understand the possible variations that a specific lower resolution image can generate, thereby increasing the trust of the diffusion model.

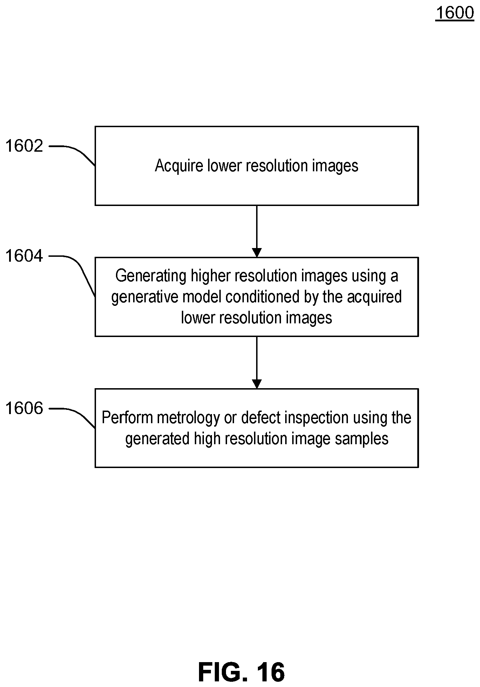

**Fig. 16** is a flowchart of an example method 1600 for image quality enhancement, consistent with embodiments of the present disclosure. In some embodiments, the method 1600 may be performed by image processing system 250 of **Fig. 2** image processing system 390 of **Fig. 3,** or server 400 of **Fig. 4.**

At step 1602, lower resolution images may be acquired. For example, the lower resolution images may be acquired by using lower resolution settings on a CPB tool (e.g., low energy settings).

At step 1604, higher resolution images may be generated using a generative model conditioned by the acquired lower resolution images. Similar to the generative models described elsewhere in this disclosure, the lower resolution images acquired in step 1602 may be used as conditioning images or conditioning parameters to guide the generative model in generating the higher resolution images.

At step 1606, metrology or defect inspection may be performed using the generated higher resolution image samples.

A non-transitory computer readable medium may be provided that stores instructions for a processor of a controller (e.g., controller 109 of **Fig. 1)** or a processor of a server (e.g., server 400 of **Fig. 4)** to carry out, among other things, image inspection, image acquisition, stage positioning, beam focusing, electric field adjustment, beam bending, condenser lens adjusting, activating charged particle source, beam deflecting, and operations 600, 620, 700, 800, 820, 900, 920, 1000, 1100, 1120, 1140, 1300, 1400, 1450, 1500, and 1550 and methods 1200 and 1600. Common forms of non-transitory media include, for example, a floppy disk, a flexible disk, hard disk, solid state drive, magnetic tape, or any other magnetic data storage medium, a Compact Disc Read Only Memory (CD-ROM), any other optical data storage medium, any physical medium with patterns of holes, a Random Access Memory (RAM), a Programmable Read Only Memory (PROM), and Erasable Programmable Read Only Memory (EPROM), a FLASH-EPROM or any other flash memory, Non-Volatile Random Access Memory (NVRAM), a cache, a register, any other memory chip or cartridge, and networked versions of the same.

The embodiments may further be described using the following clauses:

1. A method of identifying defects on a wafer under inspection, the method comprising:

   acquiring a set of labeled images, wherein the set of labeled images includes:

      a first set of images generated by a generative model trained on input images, a conditioning mask, and conditioning parameters, wherein the conditioning mask and the conditioning parameters are associated with a defect;
      the input images; and
      the conditioning mask; and

   training a segmentation model, using the set of labeled images, to predict the defect in a second set of images.

2. The method of clause 1, wherein the conditioning mask is indicative of a defect.
3. The method of clauses 1 or 2, wherein the conditioning parameters include additional information about the defect.
4. The method of any one of clauses 1-3, wherein the generative model is configured to generate a plurality of images, each of the plurality of images including a variation of the conditioning mask as determined by one or more of the conditioning parameters.
5. The method of any one of clauses 1-4, wherein:

   the generative model includes a style transfer model; and
   the conditioning parameters include information to condition the style transfer model.

6. The method of clause 5, wherein the style transfer model is configured to generate an image including the conditioning mask in a same style as the input images.
7. The method of any one of clauses 1-6, wherein the input images include charged-particle beam images of the wafer.
8. The method of any one of clauses 1-7, wherein the input images include design file images of the wafer.
9. A non-transitory computer readable medium that stores a set of instructions that is executable by at least one processor of a computing device to cause the computing device to perform operations for identifying defects on a wafer under inspection, the operations comprising:

   acquiring a set of labeled images, wherein the set of labeled images includes:

      a first set of images generated by a generative model trained on input images, a conditioning mask, and conditioning parameters, wherein the conditioning mask and the conditioning parameters are associated with a defect;
      the input images; and
      the conditioning mask; and

   training a segmentation model, using the set of labeled images, to predict the defect in a second set of images.

10. The non-transitory computer readable medium of clause 9, wherein the generative model is configured to generate a plurality of images, each of the plurality of images including a variation of the conditioning mask as determined by one or more of the conditioning parameters.
11. The non-transitory computer readable medium of clauses 9 or 10, wherein:

the generative model includes a style transfer model; and
the conditioning parameters include information to condition the style transfer model.

12. The non-transitory computer readable medium of clause 11, wherein the style transfer model is configured to generate an image including the conditioning mask in a same style as the input images.

13. An apparatus for identifying defects on a wafer under inspection, comprising:

a memory storing a set of instructions; and
at least one processor configured to execute the set of instructions to cause the apparatus to perform operations comprising:

acquiring a set of labeled images, wherein the set of labeled images includes:

a first set of images generated by a generative model trained on input images, a conditioning mask, and conditioning parameters, wherein the conditioning mask and the conditioning parameters are associated with a defect;
the input images; and
the conditioning mask; and

training a segmentation model, using the set of labeled images, to predict the defect in a second set of images.

14. The apparatus of clause 13, wherein the generative model is configured to generate a plurality of images, each of the plurality of images including a variation of the conditioning mask as determined by one or more of the conditioning parameters.

15. The apparatus of clauses 13 or 14, wherein:

the generative model includes a style transfer model; and
the conditioning parameters include information to condition the style transfer model, whereby the style transfer model is configured to generate an image including the conditioning mask in a same style as the input images.

16. A method of image quality enhancement, comprising:

generating higher resolution image samples, using a diffusion-based model trained on a distribution of possible higher resolution images given lower resolution images, wherein the higher resolution image samples match with the lower resolution images;
determining a mapping between the generated higher resolution image samples and the lower resolution images; and
performing metrology or defect inspection using the generated higher resolution image samples.

17. A non-transitory computer readable medium that stores a set of instructions that is executable by at least one processor of a computing device to cause the computing device to perform operations for image quality enhancement, the operations comprising:

generating higher resolution image samples, using a diffusion-based model trained on a distribution of possible higher resolution images given lower resolution images, wherein the higher resolution image samples match with the lower resolution images;
determining a mapping between the generated higher resolution image samples and the lower resolution images; and
performing metrology or defect inspection using the generated higher resolution image samples.

18. An apparatus for image quality enhancement, comprising:

a memory storing a set of instructions; and
at least one processor configured to execute the set of instructions to cause the apparatus to perform operations comprising:

generating higher resolution image samples, using a diffusion-based model trained on a distribution of possible higher resolution images given lower resolution images, wherein the higher resolution image samples match with the lower resolution images;

determining a mapping between the generated higher resolution image samples and the lower resolution images; and

performing metrology or defect inspection using the generated higher resolution image samples.

Block diagrams in the figures may illustrate the architecture, functionality, and operation of possible implementations of systems, methods, and computer hardware or software products according to various exemplary embodiments of the present disclosure. In some embodiments, a non-transitory computer-readable medium is provided and can include instructions to perform the functions described in connection with any one or more of **Figs. 6-16.** In this regard, each block in a schematic diagram may represent certain arithmetical or logical operation processing that may be implemented using hardware such as an electronic circuit. Blocks may also represent a module, segment, or portion of code that comprises one or more executable instructions for implementing the specified logical functions. It should be understood that in some alternative implementations, functions indicated in a block may occur out of the order noted in the figures. For example, two blocks shown in succession may be executed or implemented substantially concurrently, or two blocks may sometimes be executed in reverse order, depending upon the functionality involved. Some blocks may also be omitted. It should also be understood that each block of the block diagrams, and combination of the blocks, may be implemented by special purpose hardware-based systems that perform the specified functions or acts, or by combinations of special purpose hardware and computer instructions.

It will be appreciated that the embodiments of the present disclosure are not limited to the exact construction that has been described above and illustrated in the accompanying drawings, and that various modifications and changes may be made without departing from the scope thereof. The present disclosure has been described in connection with various embodiments, and other embodiments will be apparent to those skilled in the art from consideration of the specification and practice of the technology disclosed herein. It is intended that the specification and examples be considered as exemplary only, with a true scope of the invention being indicated by the following claims.

## Claims

1. A method of identifying defects on a wafer under inspection, the method comprising:

   acquiring a set of labeled images, wherein the set of labeled images includes:

   a first set of images generated and labeled by a generative model trained on input images, a conditioning mask, and conditioning parameters, wherein the conditioning mask and the conditioning parameters are associated with a defect;
   the input images; and
   the conditioning mask; and

   training a segmentation model, using the set of labeled images, to predict the defect in a second set of images.

2. The method of claim 1, wherein the conditioning mask is indicative of a defect.

3. The method of claim 1, wherein the conditioning parameters include additional information about the defect.

4. The method of claim 3, wherein the generative model is configured to generate a plurality of images, each of the plurality of images including a variation of the conditioning mask as determined by one or more of the conditioning parameters.

5. The method of claim 4, wherein the conditioning mask and the conditioning parameters are changed to generate the variations.

6. The method of claim 1, wherein:

   the generative model includes a style transfer model; and
   the conditioning parameters include information to condition the style transfer model.

7. The method of claim 6, wherein the style transfer model is configured to generate an image including the conditioning mask in a same style as the input images.

8. The method of claim 1, wherein the input images include charged-particle beam images of the wafer.

9. The method of claim 1, wherein the input images include design file images of the wafer.

10. A non-transitory computer readable medium that stores a set of instructions that is executable by at least one processor of a computing device to cause the computing device to perform operations for identifying defects on a wafer under inspection, the operations comprising:

   acquiring a set of labeled images, wherein the set of labeled images includes:

   a first set of images generated by a generative model trained on input images, a conditioning mask, and conditioning parameters, wherein the conditioning mask and the conditioning parameters are associated with a defect;
   the input images; and
   the conditioning mask; and

   training a segmentation model, using the set of labeled images, to predict the defect in a second set of images.

11. The non-transitory computer readable medium of claim 10, wherein the generative model is configured to generate a plurality of images, each of the plurality of images including a variation of the conditioning mask as determined by one or more of the conditioning parameters.

12. The non-transitory computer readable medium of claim 10, wherein:

   the generative model includes a style transfer model; and
   the conditioning parameters include information to condition the style transfer model.

13. The non-transitory computer readable medium of claim 12, wherein the style transfer model is configured to generate an image including the conditioning mask in a same style as the input images.

14. An apparatus for identifying defects on a wafer under inspection, comprising:

   a memory storing a set of instructions; and
   at least one processor configured to execute the set of instructions to cause the apparatus to perform operations comprising:

   acquiring a set of labeled images, wherein the set of labeled images includes:

   a first set of images generated by a generative model trained on input images, a conditioning mask, and conditioning parameters, wherein the conditioning mask and the conditioning parameters are associated with a defect;
   the input images; and
   the conditioning mask; and

   training a segmentation model, using the set of labeled images, to predict the defect in a second set of images.

15. The apparatus of claim 14, wherein the generative model is configured to generate a plurality of images, each of the plurality of images including a variation of the conditioning mask as determined by one or more of the conditioning parameters.

16. The apparatus of claim 14, wherein:

   the generative model includes a style transfer model; and
   the conditioning parameters include information to condition the style transfer model, wherein the style transfer model is configured to generate an image including the conditioning mask in a same style as the input images.

100

FIG. 1

**FIG. 2**

EP 4 607 460 A2

104

FIG. 3

FIG. 4

400
Processor 402
Processor 402a
Processor 402b
Processor 402n
Bus 410
Memory 404
Program Instructions
Data for Processing
Network Interface 406
Peripheral Interface 408
Network
Cursor Control Device
Video Input Device
Display

**FIG. 5**

604 — Conditioning mask

606 — Conditioning Parameters Vector

600

602

Original image dataset
$p\,(x)$

608

Generative Model

610

Dataset image containing conditioning mask objects
$p\,(x|m)$

**FIG. 6**

704 — Conditioning Defect Mask

706 — Conditioning Parameters Vector

700

702 — Original Image

708

Generative Probabilistic Model

Defect in the p(x) domain

712

Style Transfer

710

+

714

716 — Generate Image With Defect

EP 4 607 460 A2

FIG. 7

**FIG. 8A**

810 GDS Like Segment Features Representation

812 Conditioning Parameters Vector

800

802

804

806 Diffusion Model

814

808

814

816

EP 4 607 460 A2

822 GDS Like Segment Features Representation

824 Conditioning Defect Mask

826

828 Conditioning Parameters Vector

+

806 Diffusion Model

Generate Image With Defect

830

820

EP 4 607 460 A2

**FIG. 8B**

FIG. 9A

FIG. 9B

1002

New dataset with ground truth label mask

1000

1004

1008

1006

Test image

1004

1010

Segmentation
Model

1012

Predicted
Mask

1006

Reference
image

**FIG. 10**

1100

1102 — Test image

1106 — Segmentation Model

Predicted mask

1108

1104 — Reference image

## FIG. 11A

1120

1122 — Transformation map $\mathcal{T}(\cdot)$

1102 1104

1124

1126

1108

Transformation map $\mathcal{T}(\cdot)$

1128

1122

## FIG. 11B

1140

1142 — Test image

$$\mathcal{T}\left( \right)$$

1106

1144 —

$$\mathcal{T}\left( \right)$$

Reference image

Segmentation Model

1146

Predicted mask

$$\mathcal{T}\left( \right)$$

1108

$$\mathcal{T}^{-1}\left( \right) = $$

1148 —

**FIG. 11C**

1200

1202 — Generate first set of images
containing a conditioning mask

1204 — Generate labels for the first set of
images

1206 — Predict a defect in a second set of
images

**FIG. 12**

FIG. 13

**FIG. 14A**

**FIG. 14B**

**FIG. 15A**

1550

1512

guidance / conditioning based on
the lower quality data

Several initial guesses
(e.g. random)

1510

1502a

Reverse diffusion

1524a

1510

1502b

Reverse diffusion

1524b

**FIG. 15B**

<u>1600</u>

1602 —— Acquire lower resolution images

1604 —— Generating higher resolution images using a generative model conditioned by the acquired lower resolution images

1606 —— Perform metrology or defect inspection using the generated high resolution image samples

**FIG. 16**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SUGIYAMA, MORGAN KAUFMANN**. *Introduction to Statistical Machine Learning*, 2016, 534
- **JEBARA**. Discriminative, Generative, and Imitative Learning. *MIT Thesis*, 2002, 212
- **HAND et al.** Principles of Data Mining (Adaptive Computation and Machine Learning). MIT Press, 2001, 578